# EUROPÄISCHE PATENTSCHRIFT

(11) **EP 3 529 183 B1**
(45) Veröffentlichungstag und Bekanntmachung des Hinweises auf die Patenterteilung: **23.06.2021**
(21) Anmeldenummer: 17772662.7
(22) Anmeldetag: 19.09.2017
(51) Int. Cl.: B65H 3/08, B65B 41/06, B65B 57/04, B65G 1/00, B65G 61/00

(54) **VERFAHREN UND VORRICHTUNG ZUM UMGANG MIT FLÄCHIGEN ZUSCHNITTEN EINES EINE VIELZAHL AN FLÄCHIGEN ZUSCHNITTEN AUFWEISENDEN STAPELS**
METHOD AND DEVICE FOR HANDLING FLAT CUT SHEETS FROM A STACK COMPRISING A PLURALITY OF FLAT CUT SHEETS
PROCÉDÉ ET DISPOSITIF POUR LA MANUTENTION DE DÉCOUPES PLANES D'UNE PILE COMPRENANT UNE PLURALITÉ DE DÉCOUPES PLANES

(30) Priorität: 19.10.2016 DE 102016220455
(43) Veröffentlichungstag der Anmeldung: 28.08.2019
(73) Patentinhaber: KRONES Aktiengesellschaft, 93073 Neutraubling (DE)
(72) Erfinder: BEER, Erhard, 93073 Neutraubling (DE); KOLLMUSS, Manuel, 93073 Neutraubling (DE); OSTERHAMMER, Martin, 93073 Neutraubling (DE); SEMMELROCK, Albin, 93073 Neutraubling (DE); ZEINER, Peter, 93073 Neutraubling (DE)
(74) Vertreter: Benninger, Johannes
(86) Internationale Anmeldenummer: PCT/EP2017/073610
(87) Internationale Veröffentlichungsnummer: WO 2018/072950

(56) Entgegenhaltungen:
- WO-A1-2016/116362
- DE-A1-102015 200 733

## Beschreibung

Die vorliegende Erfindung betrifft ein Verfahren und eine Vorrichtung zum Umgang mit flächigen Zuschnitten eines eine Vielzahl an flächigen Zuschnitten aufweisenden Stapels mit den Merkmalen der unabhängigen Ansprüche 1 bzw. 9.

Aus dem Stand der Technik sind bereits Palettiervorrichtungen bekannt, welche mehrere Artikel auf einer Palette anordnen und die Artikel der jeweiligen Palette abschließend mittels Stretchfolie umhüllen.

Bei derartigen Paletten sind typischerweise mehrere Lagen an Artikeln auf der jeweiligen Palette übereinander angeordnet, um eine große Anzahl an Artikeln auf der jeweiligen Palette platzieren zu können. Die Artikel können beispielsweise durch Gebinde mit mehreren Getränkebehältnissen ausgebildet sein. Derartige Artikel besitzen häufig eine komplexe Geometrie, so dass eine Stapelung mit mehreren Lagen zu Problemen hinsichtlich der Stabilität der gesamten Palettenzusammenstellung führen kann. Insbesondere während des Transportes der Palette ist es notwendig, eine ausreichende mechanische Stabilität für die Palettenzusammenstellung gewährleisten zu können, um ein Kippen der jeweiligen Artikel mit Gewissheit ausschließen zu können.

Um die Stabilität der Palettenzusammenstellung zu erhöhen bzw. um überhaupt eine ausreichende Stabilität für die Palettenzusammenstellung gewährleisten zu können, ist es aus dem Stand der Technik bekannt, für aufeinander bzw. übereinander stehende Artikel sog. Zwischenlagen vorzusehen. Derartige Zwischenlagen können sich zumindest näherungsweise über die gesamte Palettenbreite erstrecken, so dass sämtliche Artikel jeweils auf einer derartigen Zwischenlage aufstehen, die wiederum auf der Oberseite einer darunter befindlichen Artikellage liegt. In der Praxis derzeit verwendete Zwischenlagen sind beispielsweise aus Papier, Kartonage, Pappe, Wellpappe oder aus ähnlichen Materialien gebildet. Aufgrund ihrer Steifigkeit wird mittels der Zwischenlagen jeweils eine stabile Aufstandsfläche für übereinander angeordnete Artikellagen bereitgestellt. Auch kann es sein, dass für eine Ebene der Palette mehrere Zwischenlagen bereitgestellt werden bzw. dass eine Ebene der Palette durch mehrere Zwischenlagen gebildet wird, auf welchen die Artikel aufstehen.

Für automatisierte Prozesse der Palettierung ist es notwendig, dass Zwischenlagen schnell und in großer Anzahl zur Verfügung stehen. Bekannt sind daher Zwischenlagenstapel, die eine Vielzahl von derartigen Zwischenlagen umfassen.

Bevor die jeweiligen Zwischenlagen auf der Palette platziert werden, wird eine einzelne zuoberst auf dem Stapel angeordnete Zwischenlage vom Stapel abgetrennt und hierauf folgend auf der jeweiligen Palette abgesetzt. Hierzu sind aus dem Stand der Technik bereits zahlreiche Vorrichtungen bekannt, mittels welchen ein derartiges Abtrennen einzelner Zwischenlagen von einem Stapel erfolgen kann.

So offenbart beispielsweise die DE 37 02 965 A1 eine solche Vorrichtung. Mittels dieser bekannten Vorrichtung können Packungen auf einer Palette abgesetzt und Zwischenlagen zwischen vertikal aufeinanderfolgenden Ebenen an Packungen eingebracht werden. Die Vorrichtung umfasst eine Reihe von heb- und senkbaren Saugern, die an einem gemeinsamen, horizontal verschiebbaren Schlitten angeordnet sind. Die horizontale Bewegung des Schlittens wird über einen pneumatischen oder hydraulischen Arbeitszylinder bewirkt. Weiter ist ein Mitnehmerzangenpaar vorgesehen, welches die jeweilige Zwischenlage in Richtung einer Palette weiterbewegt.

Zudem offenbart die DE 10 2004 031 301 A1 eine derartige Vorrichtung, bei der ein Stapel an Zwischenlagen zur Verfügung gestellt und über einen Greifer mit Saugnäpfen aufgenommen wird. Anschließend wird die Zwischenlage durch den Greifer angehoben und auf der jeweiligen Palette abgesetzt. Nach Absetzen der Zwischenlage wird der Greifer zurückgefahren, um die nächste Zwischenlage abzuholen.

Die Praxis hat allerdings gezeigt, dass ein Abtrennen von Zwischenlagen und das hieran anschließende Überführen an die jeweilige Palette mit grundsätzlichen Problemen behaftet sind. Wird eine jeweilige Zwischenlage auf einer jeweiligen Palette aufgesetzt, so kann es vorkommen, dass ihre Position nicht genau mit einer für die jeweilige Zwischenlage vorgesehenen Soll-Position übereinstimmt. Insbesondere können solche Probleme auftreten, wenn mehrere Zwischenlagen des jeweiligen Zwischenlagenstapels nicht bündig aufeinander aufliegen, die jeweiligen Zwischenlagen entlang eines definierten Verbringungsweges befördert und hierauf folgend auf einer jeweils zugeordneten Palette abgesetzt werden Das nächstliegende Verfahren bzw. die nächstliegende Vorrichtung sind in dem Dokument WO 2016/116362 A1 offenbart.

Weiter hat die Praxis gezeigt, dass unmittelbar benachbarte flächige Zuschnitte bzw. Zwischenlagen ggf. aufgrund elektrostatischer Adhäsion und/oder aufgrund mechanischen Verhakens aneinander anhaften können. Bei Abtrennen einer zuoberst auf einem jeweiligen Stapel angeordneten Lage können an dieser Lage daher weitere Lagen ungewollt anhaften. Hierbei kann es notwendig sein, den Palettierungsprozess zu unterbrechen, bis die Probleme beim Abtrennen der Zwischenlagen ggf. durch einen Bediener beseitigt werden.

Eine Aufgabe der Erfindung kann aus diesem Grunde darin gesehen werden, ein Verfahren und eine Vorrichtung bereit zu stellen, mittels welchen sich die genannten Probleme bei der Bereitstellung einzelner flächiger Zuschnitte eines eine Vielzahl an flächigen Zuschnitten aufweisenden Stapels zumindest reduzieren, vorzugsweise jedoch nahezu eliminieren lassen. Die Vorrichtung soll zudem einen einfachen Aufbau besitzen und das Verfahren einfach umgesetzt werden können.

Die obigen Aufgaben werden durch ein Verfahren und eine Vorrichtung gelöst, welche die Merkmale in den unabhängigen Ansprüchen aufweisen. Vorteilhafte Ausführungsformen werden in den jeweiligen abhängigen Ansprüchen beschrieben.

Die Erfindung betrifft ein Verfahren zum Umgang mit flächigen Zuschnitten eines eine Vielzahl an flächigen Zuschnitten aufweisenden Stapels.

Im Rahmen eines ersten Schrittes des erfindungsgemäßen Verfahrens wird eine Versatzbewegung für einen jeweils zuoberst auf dem Stapel angeordneten bzw. für einen jeweils zuoberst auf dem Stapel positionierten Zuschnitt durchgeführt. Hierbei wird der jeweilige zuoberst auf dem Stapel angeordnete Zuschnitt relativ zu weiteren benachbarten Zuschnitten bewegt, so dass eine vordere Kante des zuoberst auf dem Stapel angeordneten Zuschnittes bei Beenden der Versatzbewegung über den Stapel hinausragt.

Vorstellbar ist hierbei, dass der jeweilige zuoberst auf dem Stapel angeordnete bzw. jeweils zuoberst auf dem Stapel positionierte Zuschnitt vom Stapel angehoben wird, seitlich in Richtung weg des Stapels bewegt wird und nachfolgend wieder auf den Stapel aufgesetzt wird, so dass eine vordere Kante des zuoberst auf dem Stapel angeordneten Zuschnittes bei Beenden der Versatzbewegung über den Stapel hinausragt. Das Anheben des jeweiligen zuoberst auf dem Stapel positionierten Zuschnittes und die Bewegung seitlich in Richtung weg des Stapels können hierbei zeitlich überlagert sein. Sofern die Versatzbewegung über mindestens ein nachfolgend noch beschriebenes Saug- und/oder Greifwerkzeug bewirkt wird, kann das mindestens eine Saug- und/oder Greifwerkzeug für die Versatzbewegung im Bereich eines Schwerpunktes des jeweils zuoberst auf dem Stapel angeordneten Zuschnittes angreifen. Denkbar ist beispielsweise, dass der jeweilige zuoberst auf dem Stapel angeordnete bzw. positionierte Zuschnitt vollständig vom Stapel abgehoben wird, so dass der jeweilige zuoberst auf dem Stapel positionierte Zuschnitt keinen Oberflächenkontakt zum Stapel besitzt. Nach vollständigem Abheben des jeweiligen zuoberst auf dem Stapel angeordneten Zuschnittes und nach Bewegung des jeweiligen zuoberst auf dem Stapel angeordneten Zuschnittes in Richtung weg des Stapels, kann der jeweilige Zuschnitt erneut auf den Stapel aufgesetzt werden, wobei eine vordere Kante dieses Zuschnittes bzw. dieses erneut zuoberst auf dem Stapel angeordneten Zuschnittes über den Stapel hinausragt. Insbesondere kann die vordere Kante des zuoberst auf dem Stapel angeordneten Zuschnittes zeitlich nach Versatzbewegung in einer Richtung über den Stapel hinausragen, in welcher der Zuschnitt zeitlich nach einer noch beschriebenen Zentrierbewegung vollständig vom Stapel abgezogen wird.

Ein jeweiliger zuoberst auf einem Stapel angeordneter bzw. positionierter Zuschnitt kann ungewollt über elektrostatische Adhäsion oder durch mechanisches Verhaken mit mindestens einem weiteren unmittelbar benachbarten Zuschnitt in Verbindung stehen. Durch eine solche Verbindung können mit einem Abtrennen des jeweiligen Zuschnittes vom Stapel Probleme einhergehen. Mittels der beschriebenen Versatzbewegung kann vorteilhafterweise eine solche ungewollte Verbindung zwischen einem jeweils zuoberst auf einem Stapel angeordneten bzw. positionierten Zuschnittes aufgehoben werden, so dass der jeweilige zuoberst auf einem Stapel angeordnete bzw. der jeweilige zuoberst auf einem Stapel positionierte Zuschnitt einzeln vom Stapel abgetrennt werden kann.

Weiter wird im Rahmen des erfindungsgemäßen Verfahrens eine Zentrierbewegung zeitlich nach Beenden der Versatzbewegung durchgeführt. Die vordere über den Stapel hinausragende Kante des zuoberst auf dem Stapel angeordneten Zuschnittes wird hierbei in eine bestimmte Orientierung und/oder Position überführt, wobei zeitlich nach Beenden der Zentrierbewegung der zuoberst auf dem Stapel angeordnete Zuschnitt weiterhin auf dem Stapel aufliegt. Im Rahmen der Zentrierbewegung kann die vordere über den Stapel hinausragende Kante ggf. gedreht werden, so dass die vordere über den Stapel hinausragende Kante zeitlich nach der Zentrierbewegung eine drehkonforme Orientierung besitzt.

Durch das Überführen der vorderen über den Stapel hinausragenden Kante in die bestimmte Position und/oder Orientierung, kann der jeweilige zuoberst auf dem Stapel angeordnete Zuschnitt nachfolgend vom Stapel abgegriffen, entlang eines definierten Verbringungsweges transportiert und hierbei in Richtung einer jeweils zugeordneten Palette bewegt werden. Die jeweils zugeordnete Palette kann der jeweilige Zuschnitt hierdurch mit bestimmter Ausrichtung bzw. Orientierung erreichen, so dass unter Zuhilfenahme des erfindungsgemäßen Verfahrens und der beschriebenen Überführung einer jeweiligen vorderen Kante in die bestimmte Orientierung und/oder Position Paletten mit hoher Stabilität bereitgestellt werden können. Die jeweiligen Zuschnitte bzw. Zwischenlagen können exakt bzw. mit passender Orientierung und/oder Position auf die jeweils zugeordnete Palette aufgesetzt werden.

Bei einer bevorzugten Ausführungsform des erfindungsgemäßen Verfahrens kann es sich bei der Vielzahl an Zuschnitten um Zwischenlagen handeln. Die Zwischenlagen können aus Papier, Kartonage, Pappe, Wellpappe. Weiter können die Zwischenlagen dazu ausgebildet bzw. vorbereitet sein, eine erste untere Lage von einer weiteren oberen Lage zu trennen. Eine Dimensionierung der Zwischenlagen des Stapels kann an eine Dimensionierung einer Palette angepasst sein, an welche die jeweiligen Zwischenlagen nach Abtrennen vom Stapel überführt werden, um eine untere Lage von einer oberen Lage zu trennen. Der Begriff "Zwischenlage" ist hierbei breit zu verstehen. So können die Zwischenlagen beispielsweise auch als sog. Halblagen ausgebildet sein, von welchen Halblagen zwei oder mehr als zwei gemeinsam eine jeweilige Ebene für eine Palette bereitstellen.

Es kann zudem sein, dass zum Durchführen der Versatzbewegung mindestens ein Saug- und/oder Greifwerkzeug bzw. mindestens ein Saug- und/oder Greifinstrument eine Verbindung zu dem jeweiligen zuoberst auf dem Stapel angeordneten Zuschnitt herstellt, hierauf folgenden den jeweiligen zuoberst auf dem Stapel angeordneten Zuschnitt versetzt und zeitlich vor dem Durchführen der Zentrierbewegung die Verbindung zum jeweiligen zuoberst auf dem Stapel angeordneten Zuschnitt aufhebt. Nach Aufheben der Verbindung und zeitlich vor und/oder überlagert mit der Zentrierbewegung kann das mindestens eine Saug- und/oder Greifwerkzeug in Richtung nach oben von dem jeweiligen zuoberst auf dem Stapel angeordneten Zuschnitt wegbewegt bzw. abgezogen werden.

Das mindestens eine Saug- und/oder Greifwerkzeug kann wenigstens einen Saugkopf besitzen, über welchen das mindestens eine Saug- und/oder Greifwerkzeug bzw. das mindestens eine Saug- und/oder Greifinstrument durch Unterdruck eine jeweilige Verbindung zum jeweiligen zuoberst auf dem Stapel angeordneten Zuschnitt herstellt. Der wenigstens eine Saugkopf kann bei einer ausgebildeten Verbindung mit dem jeweiligen zuoberst auf dem Stapel angeordneten Zuschnitt in Anlage stehen. Zum Aufheben der Verbindung kann der zwischen dem wenigstens einen Saugkopf und dem jeweiligen Zuschnitt ausgebildete bzw. hergestellte Unterdruck aufgehoben werden. Zum Herstellen der Verbindung durch Unterdruck und zum Aufheben der Verbindung kann das Saug- und/oder Greifwerkzeug mit seinem jeweiligen wenigstens einen Saugkopf mit einer nachfolgend noch beschriebenen Steuerungseinheit in Verbindung stehen.

Weiter kann es sein, dass das mindestens eine Saug- und/oder Greifwerkzeug zeitlich nach Durchführen der Zentrierbewegung erneut eine Verbindung zu dem jeweiligen zuoberst auf dem Stapel angeordneten Zuschnitt herstellt und hierauf den jeweiligen zuoberst auf dem Stapel angeordneten Zuschnitt vollständig vom Stapel abzieht und vom Stapel weg bewegt. Sofern das mindestens eine Saug- und/oder Greifwerkzeug, wie vorhergehend erwähnt, nach Aufheben der Verbindung und zeitlich vor und/oder überlagert mit der Zentrierbewegung in Richtung nach oben von der jeweiligen zuoberst auf dem Stapel angeordneten Lage weg bewegt bzw. abgezogen wird, kann das mindestens eine Saug- und/oder Greifwerkzeug nach Durchführen der Zentrierbewegung erneut auf den Stapel abgesenkt werden und hierbei mit dem jeweiligen zuoberst auf dem Stapel angeordneten Zuschnitt in Kontakt treten.

Insbesondere kann das Saug- und/oder Greifwerkzeug den jeweiligen zuoberst auf dem Stapel angeordneten Zuschnitt vollständig vom Stapel abziehen, vom Stapel weg bewegen und in Richtung einer Ablage führen bzw. auf einer Ablage absetzen, von welcher Ablage ein Arbeitsinstrument bzw. ein weiteres Saug- und/oder Greifwerkzeug den jeweiligen Zuschnitt entgegennimmt und auf einer zugeordneten Palette als Zwischenlage absetzt. Das weitere Saug- und/oder Greifwerkzeug kann den jeweiligen Zuschnitt hierbei mittels einer Schwenkbewegung an die jeweilige Palette überführen bzw. zum Überführen des Zuschnittes an die jeweilige Palette eine Schwenkbewegung durchführen.

In diversen Ausführungsformen kann vorgesehen sein, dass ein bestimmtes Saug- und/oder Greifwerkzeug die Verbindung zum jeweiligen zuoberst auf dem Stapel angeordneten Zuschnitt herstellt, hierauf folgenden den jeweiligen zuoberst auf dem Stapel angeordneten Zuschnitt versetzt und zeitlich vor dem Durchführen der Zentrierbewegung die Verbindung zum jeweiligen zuoberst auf dem Stapel angeordneten Zuschnitt aufhebt. Weiter kann dieses bestimmte Saug- und/oder Greifwerkzeug bzw. dieses eine bestimmte Saug- und/oder Greifwerkzeug zeitlich nach Durchführen der Zentrierbewegung den jeweiligen zuoberst auf dem Stapel angeordneten Zuschnitt vollständig vom Stapel abziehen und vom Stapel weg bewegen. Insbesondere kann das bestimmte Saug- und/oder Greifwerkzeug bzw. das eine bestimmte Saug- und/oder Greifwerkzeug eine pneumatische Verbindung zum jeweiligen zuoberst auf dem Stapel angeordneten Zuschnitt herstellen.

Denkbar ist darüber hinaus, dass zum Überführen der vorderen Kante des zuoberst auf dem Stapel angeordneten Zuschnittes in die bestimmte Orientierung und/oder Positionierung ein Anschlag gegen den zuoberst auf dem Stapel angeordneten Zuschnitt sowie gegen die weiteren Zuschnitte bewegt wird, welche weiteren Zuschnitte dem jeweiligen zuoberst auf dem Stapel angeordneten Zuschnitt benachbart sind. Hieraus resultierend können der jeweilige zuoberst auf dem Stapel angeordnete Zuschnitt und die weiteren Zuschnitte ggf. vorderbündig ausgerichtet werden. Ein Anhaften des jeweiligen zuoberst auf dem Stapel angeordneten Zuschnittes an benachbarten Zuschnitt kann weiterhin mittels der bereits durchgeführten Versatzbewegung vermieden werden.

Auch kann es sein, dass ein erstes mit dem Anschlag mechanisch bewegungsgekoppeltes Saug- und/oder Greifinstrument bzw. Saug- und/oder Greifwerkzeug die Verbindung zum jeweiligen zuoberst auf dem Stapel angeordneten Zuschnitt herstellt, hierauf folgend den jeweiligen zuoberst auf dem Stapel angeordneten Zuschnitt versetzt und zeitlich vor dem Durchführen der Zentrierbewegung die Verbindung zum jeweiligen zuoberst auf dem Stapel angeordneten Zuschnitt aufhebt. Zudem kann ein weiteres Saug- und/oder Greifinstrument bzw. ein weiteres Saug- und/oder Greifwerkzeug zeitlich nach Durchführen der Zentrierbewegung den jeweiligen zuoberst auf dem Stapel angeordneten Zuschnitt vollständig vom Stapel abziehen und vom Stapel weg bewegen. Das wenigstens eine Zentrierelement kann zeitlich vor oder zeitlich überlagert mit dem Abziehen des jeweiligen zuoberst auf dem Stapel angeordneten Zuschnittes in Richtung nach unten abtauchen, so dass ein vertikales Niveau des Zentrierelementes geringer als ein vertikale Niveau des jeweiligen zuoberst auf dem Stapel angeordneten Zuschnittes ausgebildet ist.

Das weitere Saug- und/oder Greifwerkzeug kann den jeweiligen zuoberst auf dem Stapel angeordneten Zuschnitt hierbei, wie vorhergehend bereits erwähnt, in Richtung einer Ablage bewegen bzw. auf einer Ablage absetzen. Die Bewegung des wenigstens einen Zentrierelementes, des ersten mechanisch mit dem Anschlag bewegungsgekoppelten Saug- und/oder Greifwerkzeuges und des zweiten Saug- und/oder Greifwerkzeug können mittels einer Steuerungseinheit aufeinander abgestimmt sein.

Es kann zudem sein, dass eine vertikale Erstreckung bzw. eine jeweilige vertikale Ist-Erstreckung des Stapels festgestellt und/oder erkannt wird, wobei der jeweilige zuoberst auf dem Stapel angeordnete Zuschnitt bei einer bestimmten festgestellten und/oder erkannten ersten vertikalen Erstreckung in eine erste bestimmte Orientierung gebracht wird, bei welcher die vordere Kante bündig zu vorderen Kanten weiterer Zuschnitte des Stapels ausgerichtet wird. Beispielsweise kann es sein, dass eine jeweilige vertikale Ist-Erstreckung des Stapels unter Zuhilfenahme einer Sensorik festgestellt und/oder erkannt wird. Die Sensorik kann ggf. zum Feststellen und/oder Erkennen der jeweiligen vertikalen Ist-Erstreckung auf den Stapel bzw. auf einen jeweils zuoberst auf dem Stapel angeordneten Zuschnitt aufgesetzt werden. Beispielsweise kann die Sensorik als Taster ausgebildet sein.

Zudem kann der jeweilige zuoberst auf dem Stapel angeordnete Zuschnitt bei einer bestimmten festgestellten und/oder erkannten zweiten vertikalen Erstreckung, die geringer als die erste vertikale Erstreckung ausgebildet ist, in eine zweite bestimmte Orientierung gebracht werden, bei welcher die vordere Kante bündig zu einer vorderen Kante bzw. vorderen Außenkante einer die Zuschnitte tragenden Palette ausgerichtet ist oder über eine vorderer Kante bzw. vordere Außenkante der die Zuschnitte tragenden Palette übersteht. Insbesondere kann die vordere Kante des zuoberst auf dem Stapel angeordneten Zuschnittes vollständig über die vordere Außenkante der die Zuschnitte tragenden Palette überstehen. Die bestimmte Position und/oder Orientierung für die vordere Kante, in welche die vordere Kante des zuoberst auf dem Stapel angeordneten Zuschnittes mittels der Zentrierbewegung überführt wird, kann hierbei in lotrechter Richtung mit der vorderen Außenkante der die Zuschnitte tragenden Palette fluchten.

Die Erfindung betrifft darüber hinaus eine Vorrichtung zum Umgang mit flächigen Zuschnitten eines eine Vielzahl an flächigen Zuschnitten aufweisenden Stapels. Merkmale, welche vorhergehend bereits zu diversen Ausführungsformen des Verfahrens beschrieben wurden, können ebenso für nachfolgend beschriebene Vorrichtung vorgesehen sein und werden daher nicht redundant erwähnt. Weiter können nachfolgend beschriebene Merkmale, welche diverse Ausführungsformen der Vorrichtung betreffen, für das vorherig beschriebene Verfahren vorgesehen sein.

Die Vorrichtung umfasst mindestens ein Saug- und/oder Greifwerkzeug sowie wenigstens ein Zentrierelement. Weiter umfasst die Vorrichtung eine Steuerungseinheit, welche mit dem mindestens einen Saug- und/oder Greifwerkzeug und dem wenigstens einen Zentrierelement in Verbindung steht. Das mindestens eine Saug- und/oder Greifwerkzeug sowie das wenigstens eine Zentrierelement können somit ggf. auf Veranlassung der Steuerungseinheit bewegt werden. Zur Bewegung des mindestens einen Saug- und/oder Greifwerkzeuges sowie des wenigstens einen Zentrierelementes können mehrere Aktoren vorgesehen sein, die über die Steuerungseinheit betätigt werden.

Es ist vorgesehen, dass das mindestens eine Saug- und/oder Greifwerkzeug über die Steuerungseinheit zum Versetzen eines jeweils zuoberst auf dem Stapel aufliegenden bzw. angeordneten Zuschnittes ansteuerbar ist, so dass eine vordere Kante des zuoberst auf dem Stapel aufliegenden bzw. angeordneten Zuschnittes nach Versatz über den Stapel hinausragt. Weiter ist vorgesehen, dass das wenigstens eine Zentrierelement über die Steuerungseinheit zum Überführen der jeweiligen über den Stapel hinausragenden vorderen Kante des jeweiligen zuoberst auf dem Stapel angeordneten Zuschnittes in eine bestimmte Orientierung und/oder Position ansteuerbar ist, nach welcher Überführung der die jeweilige vordere Kante aufweisende Zuschnitt weiterhin auf dem Stapel aufliegt.

Es kann sein, dass das mindestens eine Saug- und/oder Greifwerkzeug über die Steuerungseinheit zum Abziehen des jeweiligen Zuschnittes vom Stapel ausgebildet ist, dessen vordere Kante in die bestimmte Orientierung und/oder Position überführt wurde.

In diversen Ausführungsformen kann hierbei vorgesehen sein, dass ein bestimmtes Saug- und/oder Greifwerkzeug über die Steuerungseinheit zum Versetzen des jeweils zuoberst auf dem Stapel angeordneten Zuschnittes ansteuerbar ist, so dass eine vordere Kante des zuoberst auf dem Stapel aufliegenden bzw. angeordneten Zuschnittes über den Stapel hinausragt. Weiter kann es sein, dass dieses bestimmte Saug- und/oder Greifwerkzeug über die Steuerungseinheit zum Abziehen bzw. vollständigen Abziehen des jeweiligen Zuschnittes vom Stapel ansteuerbar ist, dessen Vorderkante in die bestimmte Orientierung und/oder Position überführt wurde.

Weiter kann es sein, dass das erste Saug- und/oder Greifwerkzeug mit dem Zentrierelement bewegungsgekoppelt ist.

Vorstellbar ist auch, dass die Vorrichtung ein weiteres Zentrierelement umfasst, welches zur rückbündigen Ausrichtung mehrerer zuoberst auf dem Stapel angeordneter Zuschnitte mit dem wenigstens einen Zentrierelement bewegungsgekoppelt ist. Das Zentrierelement und das weitere Zentrierelement können über die Steuerungseinheit zum Ausführen einer gemeinsamen Zustellbewegung ansteuerbar sein. Beispielsweise können die Zentrierelemente miteinander bewegungsgekoppelt sein und zeitlich überlagert eine jeweilige Zustellbewegung ausführen.

Außerdem kann es sein, dass die Steuerungseinheit zum Feststellen und/oder Erkennen einer vertikalen Ist-Erstreckung des Stapels ausgebildet ist. Denkbar ist hierbei, dass die Steuerungseinheit mit einer Sensorik in Verbindung steht, welche mit dem Stapel bzw. mit einem jeweiligen zuoberst auf dem Stapel angeordneten Zuschnitt in Oberflächenkontakt gebracht werden kann und hierdurch der Steuerungseinheit Informationen zur jeweiligen vertikalen Ist-Erstreckung bereitstellt. Die Sensorik kann beispielsweise einen Tastsensor umfassen. Auch kann es sein, dass die Steuerungseinheit mit einer optischen Sensorik in Verbindung steht, welche der Steuerungseinheit Informationen zur jeweiligen vertikalen Ist-Erstreckung des Stapels bereitstellt.

Hierbei kann das wenigstens eine Zentrierelement über die Steuerungseinheit unter Berücksichtigung der jeweiligen erkannten und/oder festgestellten Ist-Erstreckung wahlweise
a) zur vorderbündigen Ausrichtung des jeweiligen zuoberst auf dem Stapel angeordneten Zuschnittes gegenüber weiteren Zuschnitten des Stapels angesteuert werden oder
b) zum Überführen der vorderen Kante eines jeweiligen zuoberst auf dem Stapel angeordneten Zuschnittes in eine bestimmte Orientierung und/oder Position angesteuert werden, bei welcher die vordere Kante bündig zu einer vorderen Außenkante einer Palette des Stapels ausgerichtet ist oder bei welcher die vordere Kante des Zuschnittes die vordere Außenkante der Palette seitlich überragt. Insbesondere kann die vordere Kante des Zuschnittes die vordere Außenkante der Palette hierbei seitlich vollständig überragen. Weiter kann die vordere Kante des Zuschnittes die vordere Außenkante der Palette mit bestimmter Orientierung überragen.

Auf der Steuerungseinheit können Angaben hinsichtlich einer ersten bestimmten vertikalen Ist-Erstreckung hinterlegt sein. Hierdurch kann die Steuerungseinheit bei festgestellter und/oder erkannter erster vertikaler Ist-Erstreckung das Zentrierelement zur vorderbündigen Ausrichtung des jeweiligen zuoberst auf dem Stapel angeordneten Zuschnittes gegenüber weiteren Zuschnitten des Stapels ansteuern. Weiter können auf der Steuerungseinheit Informationen zu einer zweiten vertikalen Ist-Erstreckung hinterlegt sein, welche geringer als die erste vertikale Ist-Erstreckung ausgebildet ist. Hierdurch kann die Steuerungseinheit bei festgestellter und/oder erkannter zweiter vertikaler Ist-Erstreckung das Zentrierelement zum Überführen der vorderen Kante eines jeweiligen zuoberst auf dem Stapel angeordneten Zuschnittes in eine bestimmte Orientierung und/oder Position ansteuern, bei welcher die vordere Kante bündig zu einer vorderen Außenkante der Palette des Stapels ausgerichtet oder bei welcher die vordere Kante die vordere Außenkante der Palette vorzugsweise vollständig seitlich überragt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer Ausführungsform einer erfindungsgemäßen Vorrichtung und verdeutlicht einzelne Aspekte, wie sie bei einer Ausführungsform eines erfindungsgemäßen Verfahrens vorgesehen sein können.
Figuren 2 und 3 zeigen eine Vorrichtung gemäß Fig. 1 sowie einzelne Schritte, wie sie bei einer Bereitstellung einzelner Zuschnittes eines eine Vielzahl an Zuschnitten aufweisenden Stapels vorliegen können.
Figuren 4 bis 8 zeigen die Vorrichtung aus den Figuren 1 bis 3 sowie einzelne Schritte, wie sie bei einer denkbaren Ausführungsform des erfindungsgemäßen Verfahrens vorgesehen sein können.
Fig. 9 zeigt eine schematische Ansicht einer weiteren Ausführungsform einer erfindungsgemäßen Vorrichtung und verdeutlicht einzelne Aspekte, wie sie bei einer Ausführungsform eines erfindungsgemäßen Verfahrens vorgesehen sein können.
Figuren 10 bis 14 zeigen die Ausführungsform einer Vorrichtung aus Fig. 9 sowie einzelne Schritte, wie sie bei einer denkbaren Ausführungsform des erfindungsgemäßen Verfahrens vorgesehen sein können.
Figuren 15 bis 19 zeigen die Ausführungsform einer Vorrichtung aus den Figuren 9 bis 14 sowie einzelne weitere Schritte, wie sie bei einer denkbaren Ausführungsform des erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Die nachfolgend beschriebenen Merkmale können jeweils im allgemeinen Zusammenhang Verwendung finden und sind nicht auf die jeweilige in den nachfolgenden Ausführungsbeispielen dargestellte Merkmalskombination beschränkt.

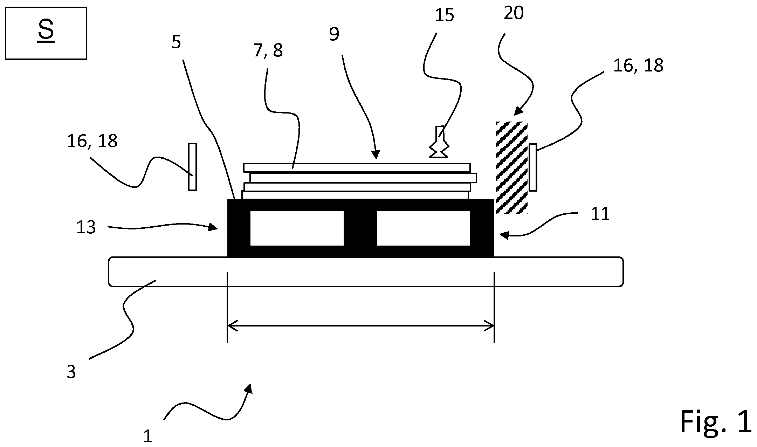

Die Fig. 1 zeigt eine schematische Ansicht einer Ausführungsform einer erfindungsgemäßen Vorrichtung 1 und verdeutlicht einzelne Aspekte, wie sie bei einer Ausführungsform eines erfindungsgemäßen Verfahrens vorgesehen sein können.

In Fig. 1 ist auf einer Aufstellfläche 3 eine Palette 5 angeordnet, welche eine Vielzahl an Zuschnitten 7 in gestapelter Form trägt. Die Zuschnitte 7 sind vorliegend als Zwischenlagen 8 ausgebildet und liegen, wie in Fig. 1 zu erkennen, nicht vollständig bündig aufeinander. Weiter bilden die Zuschnitte 7 bzw. Zwischenlagen 8 einen Stapel 9 aus. Die Palette 5 besitzt eine horizontale Erstreckung, welche in Fig. 1 mittels Pfeildarstellung angedeutet ist gegenüber einer Erstreckung der Zuschnitte 7 bzw. Zwischenlagen 8 in horizontaler Richtung vergrößert ausgebildet ist. Die Zuschnitte 7 bzw. Zwischenlagen 8 werden somit von der Palette 5 getragen, ragen jedoch seitlich jeweils nicht über eine vordere Außenkante 11 und eine hintere Außenkante 13 der Palette 5 hinaus.

Weiter ist ein als Bestandteil der Vorrichtung 1 ausgebildetes Saug- und/oder Greifwerkzeug 15 zu erkennen, welches eine jeweilige zuoberst auf dem Stapel 9 angeordnete Zwischenlage 8 bzw. einen jeweiligen zuoberst auf dem Stapel 9 angeordneten Zuschnitt 7 durch Unterdruck entgegennehmen und nach Entgegennahme manipulieren kann. Ziffern 16 verweisen jeweils auf ein Zentrierelement. Im Bereich einer Zustellbewegung 20 kann das rechtsseitig dargestellte Zentrierelement 16 bewegt bzw. verfahren werden und hierbei, wie nachfolgend noch detailliert beschrieben, eine mittels des Saug- und/oder Greifwerkzeuges 15 manipulierte bzw. gegenüber dem Stapel 9 seitlich versetzte Zwischenlage 8 ausrichten und hierbei in eine bestimmte Orientierung bringen.

Die Vorrichtung 1 besitzt zudem eine Steuerungseinheit S, welche mit dem Saug- und/oder Greifwerkzeug 15 sowie den Zentrierelementen 16 in Verbindung steht. Ein jeweiliges Manipulieren eines jeweiligen zuoberst auf dem Stapel 9 angeordneten Zuschnittes 7 bzw. einer jeweiligen zuoberst auf dem Stapel 9 angeordneten Zwischenlage 8 über das Saug- und/oder Greifwerkzeug 15 sowie ein Ausrichten der jeweiligen manipulierten Zwischenlage 8 über das rechtsseitig dargestellte Zentrierelement 16 erfolgt auf Veranlassung der Steuerungseinheit S, welche die Bewegung des Saug- und/oder Greifwerkzeuges 15 und die Bewegung der Zentrierelemente 16 aufeinander abstimmt.

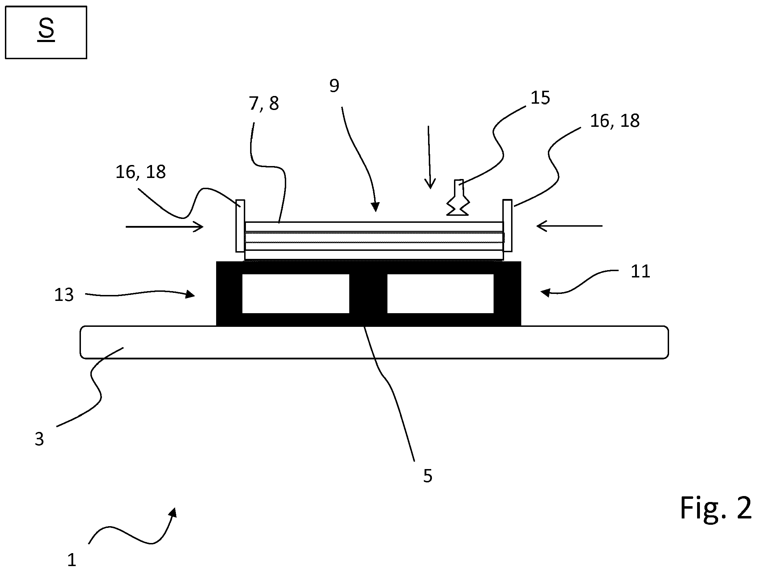

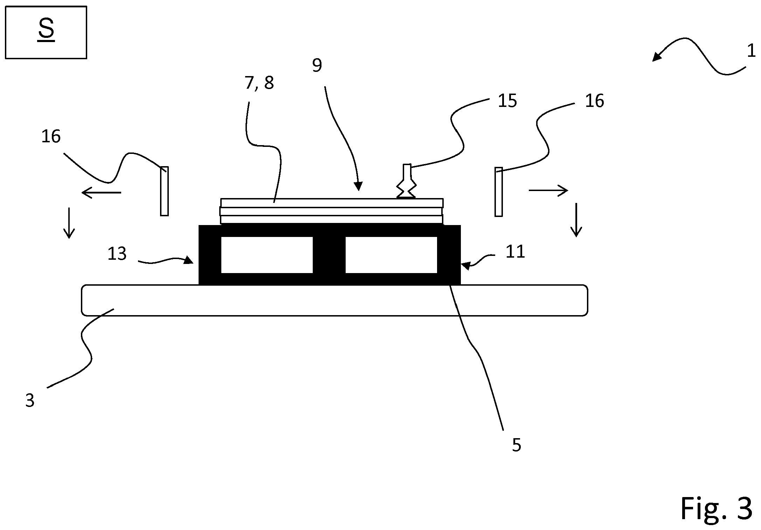

Die Figuren 2 und 3 zeigen eine Vorrichtung 1 gemäß Fig. 1 sowie einzelne Schritte, wie sie bei einer Bereitstellung einzelner Zuschnitte 7 bzw. einer Zwischenlage 8 eines eine Vielzahl an Zuschnitten 7 aufweisenden Stapels 9 vorliegen können. Bei dem in Fig. 2 gezeigten Schritt werden die Zentrierelemente 16,welche jeweils als Anschlag 18 ausgebildet sind, aufeinander zubewegt, wobei eine jeweilige zuoberst auf dem Stapel 9 angeordnete Zwischenlage 8 vorderbündig und rückbündig zu benachbarten Zwischenlagen 8 des Stapels 9 ausgerichtet wird. Das Saug- und/oder Greifwerkzeug 15 wird hierauf folgend auf die jeweilige zuoberst auf dem Stapel 9 angeordnete Zwischenlage 8 bzw. auf den jeweiligen zuoberst auf dem Stapel 9 angeordneten Zuschnitt 7 abgesenkt und fixiert die jeweilige zuoberst auf dem Stapel 9 angeordnete Zwischenlage 8 bzw. den jeweiligen zuoberst auf dem Stapel 9 angeordneten Zuschnitt 7 pneumatisch durch Unterdruck. Das bereits auf die zuoberst auf dem Stapel 9 angeordnete Zwischenlage 8 abgesenkte Saug- und/oder Greifwerkzeug 15 ist in Fig. 3 zu erkennen. Die im Rahmen der Zustellbewegung ausgeführte Bewegung der Zentrierelemente 16 sowie die Bewegung des Saug- und/oder Greifwerkzeuges 15 während des Absenkens auf die jeweilige zuoberst auf dem Stapel 9 angeordnete Zwischenlage 8 wird in Fig. 2 mittels Pfeildarstellung angedeutet. Die Zentrierelemente 16 bzw. Anschläge 18 sind parallel zueinander orientiert und behalten ihre parallele Orientierung während der Zustellbewegung bei.

Im Hinblick auf Fig. 3 ist dort zu erkennen, dass die Zentrierelemente 16 vom Stapel 9 bzw. der Palette 5 weg bewegt werden und in Richtung nach unten abtauchen. Die Bewegung weg vom Stapel 9 bzw. der Palette 5 und die Bewegung in Richtung nach unten können zumindest teilweise zeitlich überlagert sein. Weiter werden beide Zentrierelemente 16 bzw. Anschläge 18 zeitsynchron bewegt. Der zuoberst auf dem Stapel 9 angeordnete Zuschnitt 7 bzw. die zuoberst auf dem Stapel 9 angeordnete Zwischenlage 8 ist gegenüber weiteren benachbarten Zwischenlagen 8 bzw. Zuschnitten 7 vorderbündig und rückbündig ausgerichtet.

Nachdem die Zentrierelemente 16 bzw. Anschläge 18 vom Stapel 9 bzw. der Palette 5 weg bewegt wurden und nach unten abgetaucht sind, zieht das Saug- und/oder Greifwerkzeug 15 die jeweilige zuoberst auf dem Stapel 9 angeordnete Zwischenlage 8 bzw. den jeweiligen zuoberst auf dem Stapel 9 angeordneten Zuschnitt 7 vom Stapel 9 ab und bewegt diesen in Richtung einer in den Figuren vorliegender Patentanmeldung nicht mit dargestellten Ablage. Von dort wird der jeweilige Zuschnitt 7 bzw. die jeweilige Zwischenlage 8 erneut aufgenommen und auf einer jeweils zugeordneten Palette abgesetzt. Nach Überführung der jeweiligen zuoberst auf dem Stapel 9 angeordneten Zwischenlage 8 bzw. des jeweiligen zuoberst auf dem Stapel 9 angeordneten Zuschnittes 7 an die nicht mit dargestellte Ablage, kehrt das Saug- und/oder Greifwerkzeug 15 zum Stapel 9 zurück, um von dort nach vorder- und rückbündiger Ausrichtung der Zwischenlagen 8 des Stapels 9 durch die Zentrierelemente 16 bzw. Anschläge 18 eine weitere Zwischenlage 8 bzw. einen weiteren Zuschnitt 7 aufzunehmen.

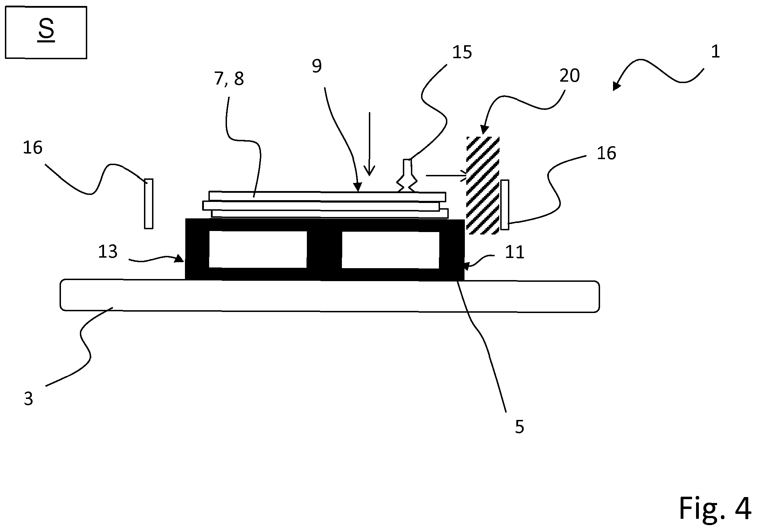

Die Figuren 4 bis 8 zeigen die Vorrichtung 1 aus den Figuren 1 bis 3 sowie einzelne Schritte, wie sie bei einer denkbaren Ausführungsform des erfindungsgemäßen Verfahrens vorgesehen sein können.

Eine Zusammenschau der Figuren 2 und 4 verdeutlicht hierbei, dass die vertikale Erstreckung des Stapels 9 in Fig. 4 gegenüber Fig. 2 durch eine Entnahme von Zuschnitten 7 bzw. Zwischenlagen 8 abgenommen hat. Für die Zentrierelemente 16 bzw. Anschläge 18 ist eine Zustellbewegung gemäß Fig. 2, bei welcher die Zuschnitte 7 bzw. Zwischenlagen 8 des Stapels 9 vorder- und rückbündig ausgerichtet werden, nicht mehr möglich, ohne hierbei mit der Palette 5 bzw. mit einer vorderen Außenkante 11 und einer hinteren Außenkante 13 der Palette 5 in Kontakt zu geraten. In der Praxis wurde bisher eine jeweilige Palette 5 mit den verbleibenden Zuschnitten 7 bzw. Zwischenlagen 8 durch eine neue Palette 5 mit einem neuen Stapel 9 an Zuschnitten 7 bzw. Zwischenlagen 8 ersetzt. Da die Zwischenlagen 8 bzw. Zuschnitte 7 des zumindest näherungsweise aufgebrauchten Stapels 9 zurückbleiben bzw. nicht mehr abgegriffen werden können, wären Verfahren und Vorrichtungen wünschenswert, welche eine Manipulation von Zuschnitten 7 bzw. Zwischenlagen 8 eines Stapels 9 mit geringer vertikaler Erstreckung ermöglichen.

Bei der Ausführungsform einer Vorrichtung 1 gemäß Figuren 1 bis 8 wird hierzu gemäß Fig. 4 das Saug- und/oder Greifwerkzeug 15 auf die jeweilige zuoberst auf dem Stapel 9 angeordnete Zwischenlage 8 bzw. auf den jeweiligen zuoberst auf dem Stapel 9 angeordneten Zuschnitt 7 aufgesetzt, woraufhin der jeweilige zuoberst auf dem Stapel 9 angeordnete Zuschnitt 7 bzw. die jeweilige zuoberst auf dem Stapel 9 angeordnete Zwischenlage 8 durch Unterdruck am Sau- und/oder Greifwerkzeug 15 temporär festgesetzt wird. Zudem werden die Zentrierelemente 16 bzw. Anschläge 18 von der Palette 5 bzw. vom Stapel 9 weg bewegt, so dass die Zentrierelemente 16 bzw. Anschläge 18 einen bestimmten horizontalen Abstand gegenüber der vorderen- und hinteren Außenkante 11 und 13 der Palette 5 besitzen.

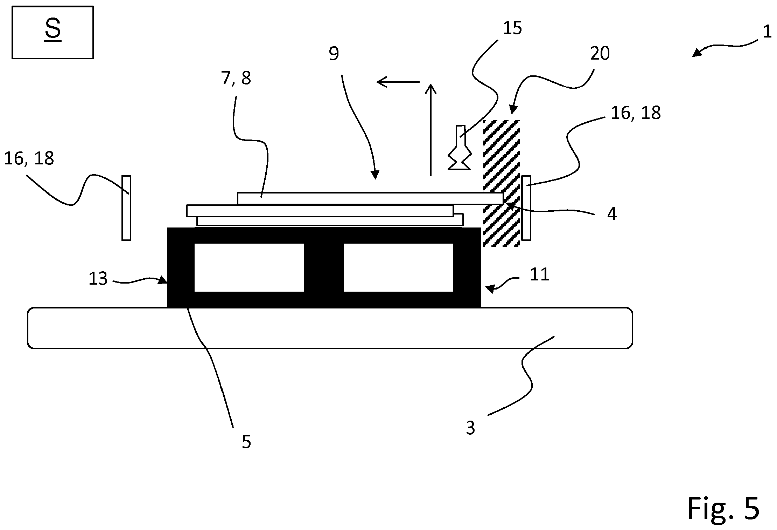

Die Fig. 5 zeigt einen weiteren Verfahrensschritt, welcher zeitlich nach dem Verfahrensschritt gemäß Fig. 4 erfolgt. Zwischen dem Verfahrensschritt aus Fig. 4 und dem Verfahrensschritt aus Fig. 5 wurde der jeweilige zuoberst auf dem Stapel 9 angeordnete Zuschnitt 7 bzw. die jeweilige zuoberst auf dem Stapel 9 angeordnete Zwischenlage 8 durch das Saug- und/oder Greifwerkzeug 15 vom Stapel 9 abgehoben und gegenüber dem Stapel 9 bzw. der Palette 5 seitlich versetzt. Nach Abheben und nach dem seitlichen Versatz hat das Saug- und/oder Greifwerkzeug 15 den jeweiligen Zuschnitt 7 bzw. die jeweilige Zwischenlage 8 erneut auf den Stapel 9 aufgesetzt, die Fixierung zur Zwischenlage 8 bzw. zum Zuschnitt 7 aufgehoben und die Zwischenlage 8 bzw. den Zuschnitt 7 in Richtung nach oben verlassen. Fig. 5 zeigt hierbei das Saug- und/oder Greifwerkzeug 15 nach Verlassen des Zuschnittes 7 bzw. der Zwischenlage 8. Durch den Versatz des Zuschnittes 7 bzw. der Zwischenlage 8 gegenüber weiteren Zuschnitten 7 bzw. Zwischenlagen 8 des Stapels 9 ragt eine vordere Kante 4 der zuoberst auf dem Stapel 9 angeordneten Zwischenlage 8 über den Stapel 9 sowie die vordere Außenkante 11 der Palette 5 seitlich hinaus. Zudem ragt die vordere Kante 4 der zuoberst auf dem Stapel 9 angeordneten Zwischenlage 8 bzw. des zuoberst auf dem Stapel 9 angeordneten Zuschnittes 7 in den Bereich einer Zustellbewegung 20 des rechtsseitig dargestellten Zentrierelementes 16 bzw. des rechtsseitig dargestellten Anschlages 18 hinein. Eine ggf. zwischen der zuoberst auf dem Stapel 9 angeordneten Zwischenlage 8 und einer benachbarten Zwischenlage 8 ausgebildete ungewollte Verbindung wurde durch das Abheben der Zwischenlage 8 und den seitlichen Versatz aufgehoben.

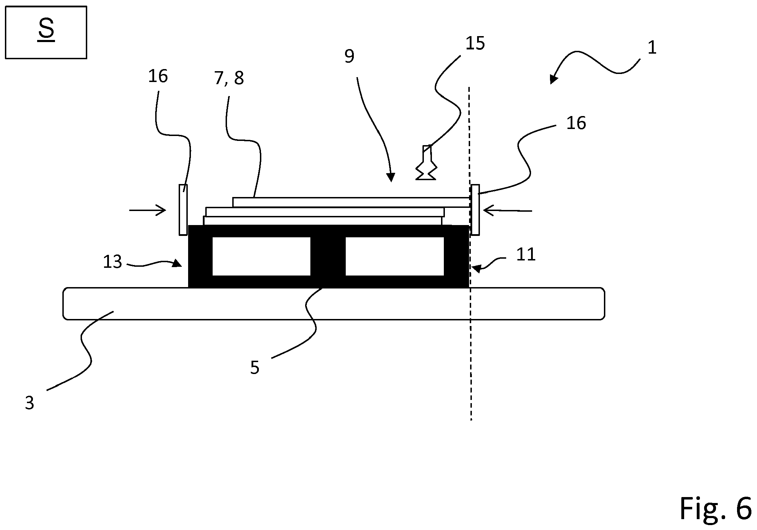

Die Fig. 6 zeigt einen Verfahrensschritt, welcher zeitlich auf den Verfahrensschritt gemäß Fig. 5 folgt. Die Zentrierelemente 16 bzw. Anschläge 18 haben eine Zustellbewegung ausgeführt und liegen nun an der vorderen Außenkante 11 und der hinteren Außenkante 13 der Palette 5 an oder befinden sich in einem Nahbereich der vorderen Außenkante 11 und der hinteren Außenkante 13 der Palette 5. Wie mit Phantomlinien angedeutet, wurde hierdurch die vordere Kante 4 des zuoberst auf dem Stapel 9 angeordneten Zuschnittes 7 bzw. der zuoberst auf dem Stapel 9 angeordneten Zwischenlage 8 in eine bestimmte Orientierung überführt, bei welcher die vordere Kante 4 des jeweiligen zuoberst auf dem Stapel 9 angeordneten Zuschnittes 7 bzw. der jeweiligen zuoberst auf dem Stapel 9 angeordneten Zwischenlage 8 bündig zur vorderen Außenkante 11 der Palette 11 ausgerichtet ist.

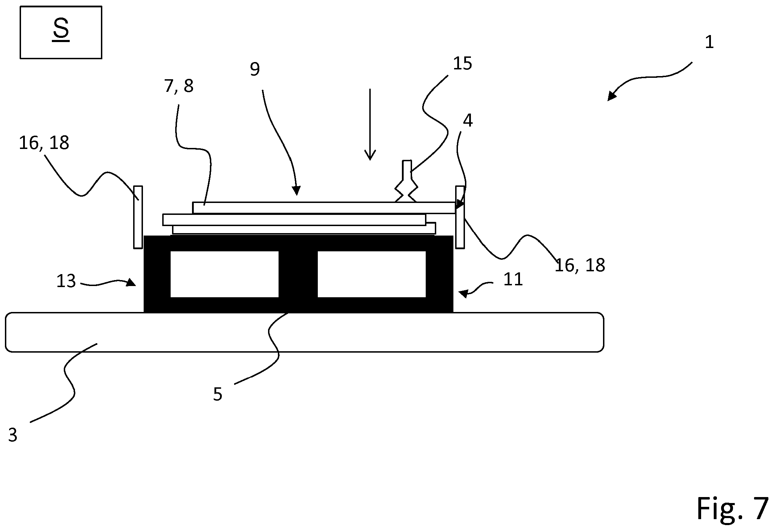

Die Fig. 7 zeigt einen Verfahrensschritt, welcher zeitlich auf den Verfahrensschritt gemäß Fig. 6 folgt. Die vordere Kante 4 der zuoberst auf dem Stapel 9 angeordneten Zwischenlage 8 ragt weiterhin über die vordere Außenkante 11 der Palette 5 hinaus. Das Saug- und/oder Greifwerkzeug 15 wurde erneut auf den zuoberst auf dem Stapel 9 angeordneten Zuschnitt 7 bzw. auf die zuoberst auf dem Stapel 9 angeordnete Zwischenlage 8 aufgesetzt und hält den zuoberst auf dem Stapel 9 angeordneten Zuschnitt 7 bzw. die zuoberst auf dem Stapel 9 angeordnete Zwischenlage 8 über Unterdruck. Die Zentrierelemente 16 bzw. Anschläge 18 liegen weiterhin an der vorderen und hinteren Außenkante 11 und 13 der Palette 5 an oder befinden sich weiterhin in einem Nahbereich der vorderen und hinteren Außenkante 11 und 13 der Palette 5.

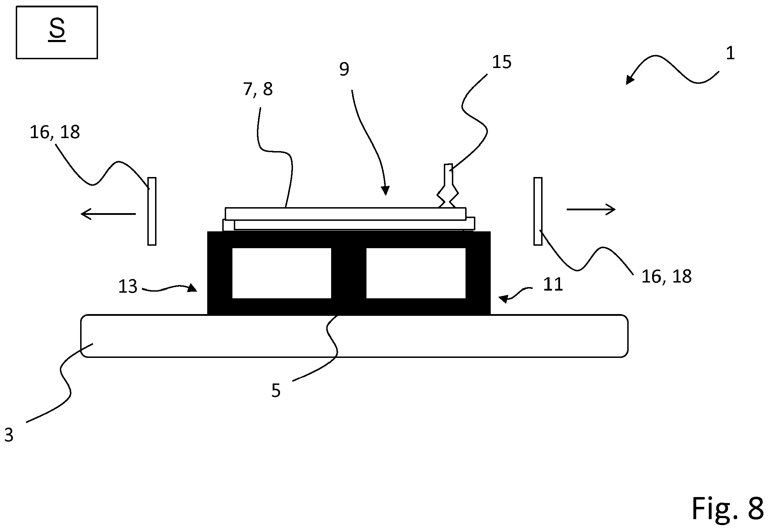

Die Fig. 8 zeigt einen Verfahrensschritt, welcher zeitlich auf den Verfahrensschritt gemäß Fig. 7 folgt. Der zuoberst auf dem Stapel 9 angeordnete Zuschnitt 7 bzw. die zuoberst auf dem Stapel 9 angeordnete Zwischenlage 8 ist weiterhin durch Unterdruck über das Saug- und/oder Greifwerkezug 15 gehalten. Das Saug- und/oder Greifwerkzeug 15 hat gegenüber dem Verfahrensschritt aus Fig. 7 seine Position beibehalten bzw. wurde gegenüber der Palette 5 nicht bewegt. Die Zentrierelemente 16 bzw. Anschläge 18 haben die vordere und hintere Außenkante 11 und 13 der Palette 5 in horizontaler Richtung verlassen bzw. wurden in horizontaler Richtung von der vorderen und hinteren Außenkante 11 und 13 der Palette 5 weg bewegt.

Zeitlich nach dem Verfahrensschritt gemäß Fig. 8 kann die zuoberst auf dem Stapel 9 angeordnete Zwischenlage 8 bzw. der zuoberst auf dem Stapel 9 angeordnete Zuschnitt 7 durch das Saug- und/oder Greifwerkzeug 15 vollständig vom Stapel 9 abgezogen und in Richtung einer jeweiligen Palette bewegt werden. Durch das Ausrichten der vorderen Kante 4 der zuoberst auf dem Stapel 9 angeordneten Zwischenlage 8 wurde eine ggf. zwischen der zuoberst auf dem Stapel 9 angeordneten Zwischenlage 8 ausgebildete ungewollte Verbindung zu einer benachbarten Zwischenlage aufgehoben. Die zuoberst auf dem Stapel 9 angeordnete Zwischenlage 8 kann hierdurch problemfrei vom Stapel 9 abgezogen werden, ohne das weitere Zwischenlagen ungewollt mitgeführt werden.

Durch das über die Zentrierelemente 16 bzw. Anschläge 18 bewirkte Überführen der zuoberst auf dem Stapel 9 angeordneten Zwischenlage 8 in die bestimmte Orientierung, bei welcher die vordere Kante 4 des Zuschnittes 7 bzw. der Zwischenlage 8 bündig zur vorderen Außenkante 11 der Palette 5 ausgerichtet ist (vgl. Figuren 6 und 7), erreicht die jeweilige vom Stapel 9 abgezogene Zwischenlage 8 eine jeweils zugeordnete Palette mit exakter Ausrichtung.

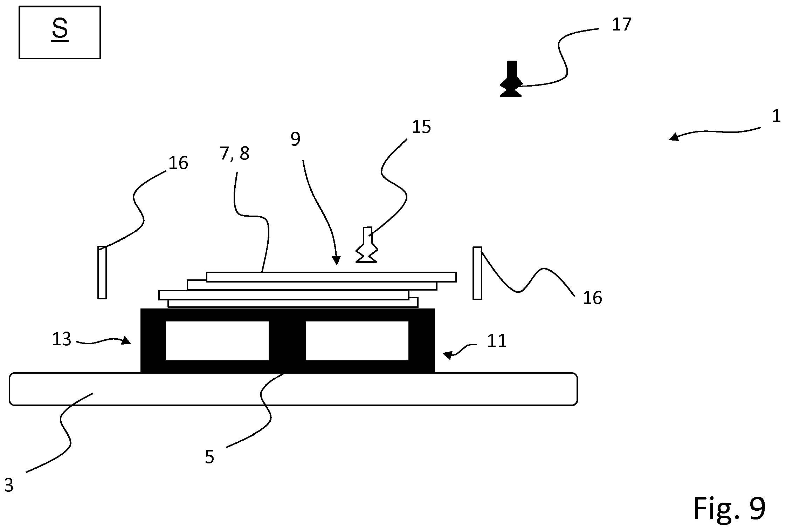

Die Fig. 9 zeigt eine schematische Ansicht einer weiteren Ausführungsform einer erfindungsgemäßen Vorrichtung 1 und verdeutlicht einzelne Aspekte, wie sie bei einer Ausführungsform eines erfindungsgemäßen Verfahrens vorgesehen sein können. Die Komponenten der Vorrichtung 1 aus Fig. 9 entsprechen im Wesentlichen den Komponenten einer Vorrichtung 1 aus den Figuren 1 bis 8. Gegenüber der Vorrichtung 1 aus den Figuren 1 bis 8 besitzt die Vorrichtung 1 aus Fig. 9 ein erstes Saug- und/oder Greifwerkzeug 15 sowie zusätzlich ein zweites Saug- und/oder Greifwerkzeug 17, welches erste und zweite Saug- und/oder Greifwerkzeug unterschiedliche Funktionen besitzen und auf Veranlassung der Steuerungseinheit S bewegt bzw. betätigt werden können.

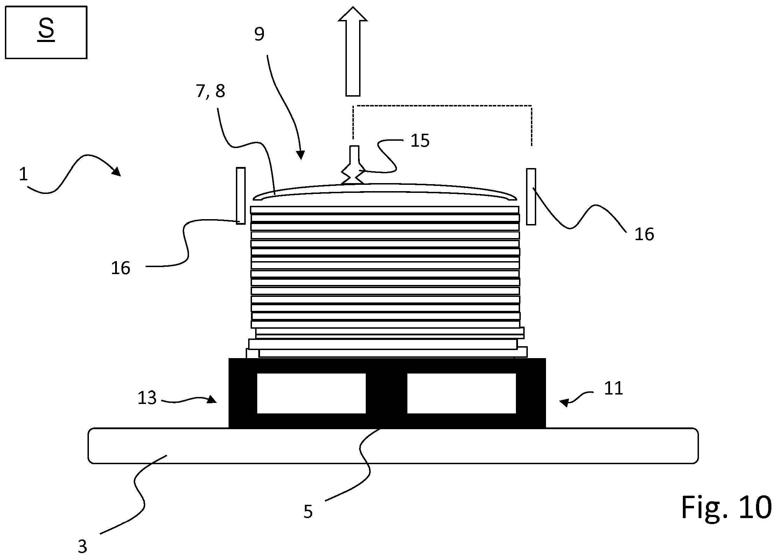

Die Figuren 10 bis 14 zeigen die Ausführungsform einer Vorrichtung 1 aus Fig. 9 sowie einzelne Schritte, wie sie bei einer denkbaren Ausführungsform des erfindungsgemäßen Verfahrens vorgesehen sein können.

In Fig. 10 wird ein erster Schritt der Ausführungsform des Verfahrens gezeigt, wie er bei einer Vorrichtung 1 gemäß Fig. 9 vorgesehen sein kann. Das in Fig. 9 bereits gezeigte erste Saug- und/oder Greifwerkzeug 15 wird auf den zuoberst auf dem Stapel 9 angeordneten Zuschnitt 7 bzw. auf die zuoberst auf dem Stapel 9 angeordnete Zwischenlage 8 aufgesetzt und hebt die zuoberst auf dem Stapel 9 angeordnete Zwischenlage 8 bzw. den zuoberst auf dem Stapel 9 angeordneten Zuschnitt 7 vom Stapel 9 ab, wobei der zuoberst auf dem Stapel 9 angeordnete Zuschnitt 7 bzw. die zuoberst auf dem Stapel 9 angeordnete Zwischenlage 8 seinen Kontakt zum Stapel 9 verliert. Das zweite Saug- und/oder Greifwerkzeug 17 (vgl. Fig. 9) befindet sich außerhalb des Bildbereichs und hat einen Zuschnitt 7 bzw. eine Zwischenlage 8 in Richtung einer zugeordneten Palette bewegt. Es ist somit in Fig. 10 nicht zu erkennen.

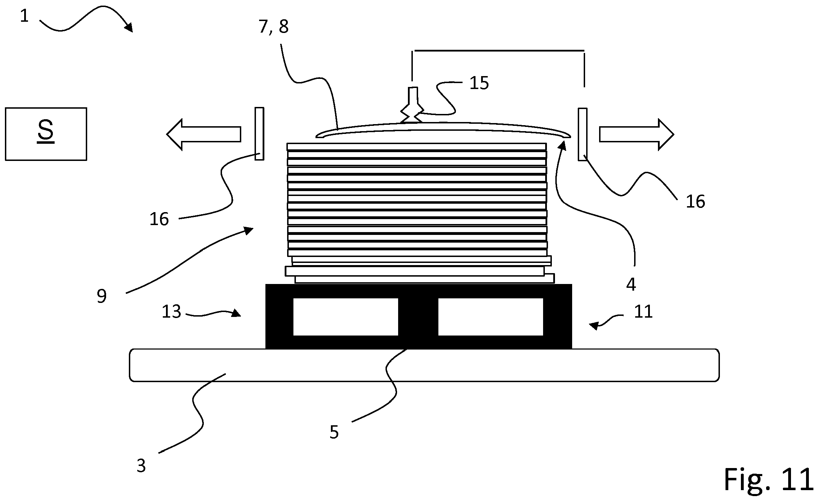

Die Fig. 11 zeigt einen weiteren Verfahrensschritt für die Vorrichtung 1 aus Figuren 9 und 10. Der Verfahrensschritt gemäß Fig. 11 folgt zeitlich auf den Verfahrensschritt aus Fig. 10. Die gegenüber dem Stapel 9 mittels des ersten Saug- und/oder Greifwerkzeuges 15 abgehobene Zwischenlage 8 bzw. der mittels des ersten Saug- und/oder Greifwerkzeuges 15 gegenüber dem Stapel 9 abgehobene Zuschnitt 7 befindet sich weiterhin in einer Position, bei welcher der Zuschnitt 7 bzw. die Zwischenlage 8 keinen Oberflächenkontakt zum Stapel 9 besitzt. Zudem wurde der Zuschnitt 7 bzw. die Zwischenlage 8 vom ersten Saug- und/oder Greifwerkzeug 15 versetzt, so dass eine vordere Kante 4 über den Stapel 9 hinausragt. Eine Zusammenschau der Figuren 10 und 11 zeigt zudem, dass die Zentrierelemente 16 bzw. Anschläge 18 vom Stapel 9 bzw. der Palette 5 weg bewegt wurden.

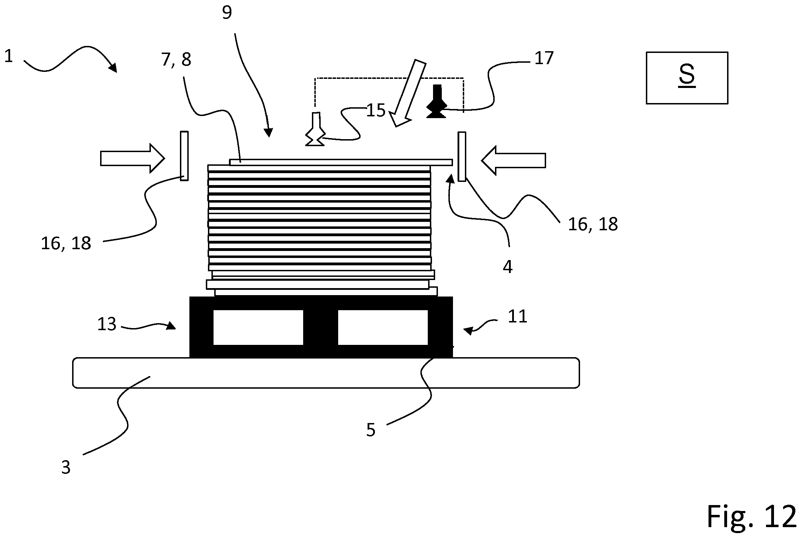

Die Fig. 12 zeigt die Ausführungsform einer Vorrichtung 1 aus den Figuren 9 bis 11 und einen weiteren Verfahrensschritt, wie er in denkbaren Ausführungsformen auf den Verfahrensschritt gemäß Fig. 11 folgen kann. Das erste Saug- und/oder Greifwerkzeug 15 hat die zuoberst auf dem Stapel 9 angeordnete Zwischenlage 8 bzw. den zuoberst auf dem Stapel 9 angeordneten Zuschnitt 7 verlassen, wobei die vordere Kante 4 der zuoberst auf dem Stapel 9 angeordneten Zwischenlage 8 bzw. die vordere Kante 4 des zuoberst auf dem Stapel 9 angeordneten Zuschnittes 7 über den Stapel 9 hinausragt. Das zweite Saug- und/oder Greifwerkzeug 17 ist nun in Fig. 12 zu erkennen und bewegt sich in Richtung der zuoberst auf dem Stapel 9 angeordneten Zwischenlage 8 bzw. in Richtung des zuoberst auf dem Stapel 9 angeordneten Zuschnittes 7. Weiter führen die Zentrierelemente 16 bzw. Anschläge 18 eine Zustellbewegung in Richtung des Stapels 9 aus, wobei die zuoberst auf dem Stapel 9 angeordnete Zwischenlage 8 bzw. der zuoberst auf dem Stapel 9 angeordnete Zuschnitt 7 vorder- und rückbündig zu benachbarten Zuschnitten bzw. Zwischenlagen des Stapels 9 ausgerichtet wird. Die Zentrierelemente 16 bzw. Anschläge 18 sind parallel zueinander orientiert und behalten ihre parallele Orientierung im Verlauf der Zustellbewegung bei.

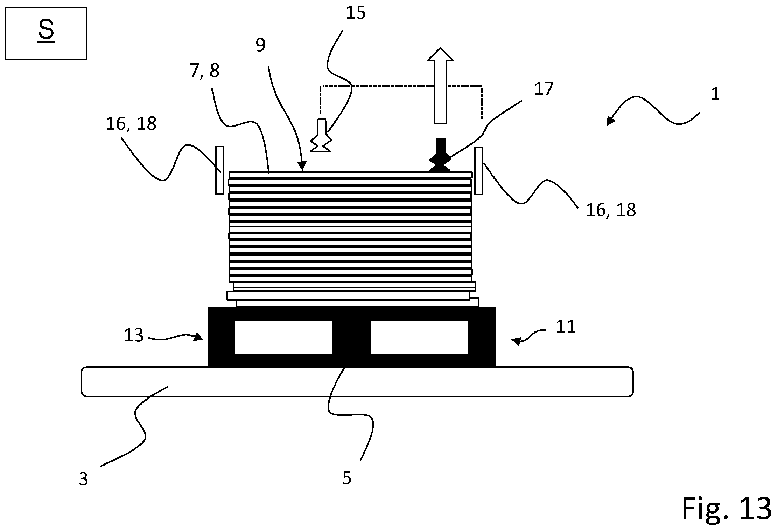

Die Fig. 13 zeigt die Ausführungsform einer Vorrichtung 1 aus den Figuren 9 bis 12 und einen weiteren Verfahrensschritt, wie er in denkbaren Ausführungsformen auf den Verfahrensschritt gemäß Fig. 12 folgen kann. Das erste Saug- und/oder Greifwerkzeug 15 hat seine Verbindung zur zuoberst auf dem Stapel 9 angeordneten Zwischenlage 8 bzw. zum zuoberst auf dem Stapel 9 angeordneten Zuschnitt 7 aufgehoben und wurde in Richtung nach oben vom Stapel 9 weg bewegt. Die Zentrierelemente 16 haben ihre Zustellbewegung ausgeführt, so dass die zuoberst auf dem Stapel 9 angeordnete Zwischenlage 8 bzw. der zuoberst auf dem Stapel 9 angeordnete Zuschnitt 7 bündig zu benachbarten Zuschnitten 7 bzw. Zwischenlagen 8 des Stapels 9 ausgerichtet ist. Weiter wurde das zweite Saug- und/oder Greifwerkzeug 17 auf die zuoberst auf dem Stapel 9 angeordnete Zwischenlage 8 bzw. auf den zuoberst auf dem Stapel 9 angeordneten Zuschnitt 7 abgesenkt und hat die zuoberst auf dem Stapel 9 angeordnete Zwischenlage 8 bzw. den zuoberst auf dem Stapel 9 angeordneten Zuschnitt 7 durch Unterdruck erfasst.

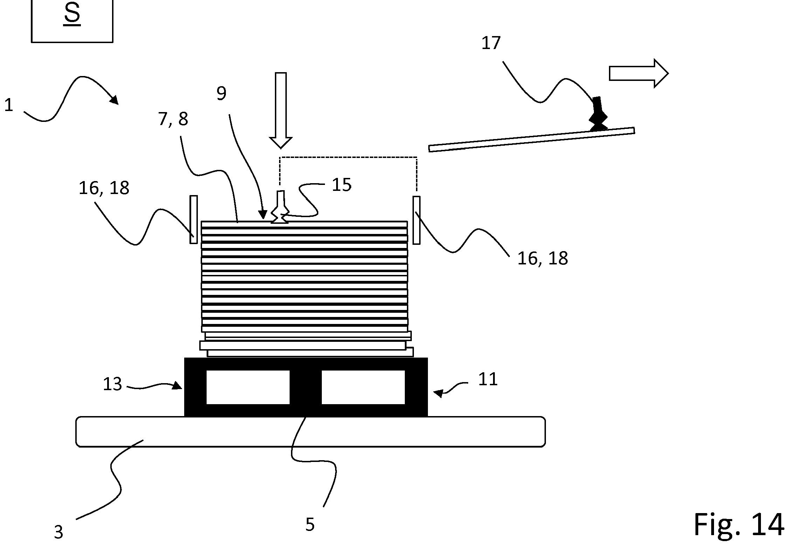

Die Fig. 14 zeigt die Ausführungsform einer Vorrichtung 1 aus den Figuren 9 bis 13 und einen weiteren Verfahrensschritt, wie er in denkbaren Ausführungsformen auf den Verfahrensschritt gemäß Fig. 13 folgen kann. Das zweite Saug- und/oder Greifwerkzeug 17 hat die ehemals zuoberst auf dem Stapel 9 angeordnete Zwischenlage 8 bzw. den ehemals zuoberst auf dem Stapel 9 angeordneten Zuschnitt 7 vollständig vom Stapel 9 abgezogen und bewegt den Zuschnitt 7 bzw. die Zwischenlage 8 in Richtung einer Ablage, von welcher ein Arbeitsinstrument den Zuschnitt 7 bzw. die Zwischenlage 8 entgegennimmt und auf einer zugeordneten Palette absetzt.

Weiter wurde das erste Saug- und/oder Greifwerkzeug 15 auf die nun zuoberst auf dem Stapel 9 angeordnete Zwischenlage 8 bzw. auf den nun zuoberst auf dem Stapel 9 angeordneten Zuschnitt 7 aufgesetzt und stellt eine temporäre Verbindung zum nun zuoberst auf dem Stapel 9 angeordneten Zuschnitt 7 bzw. zur nun zuoberst auf dem Stapel 9 angeordneten Zwischenlage 8 her. Die weiteren Schritte erfolgen sodann gemäß vorherigen Figuren 10 bis 13 in der beschrieben Reihenfolge erneut.

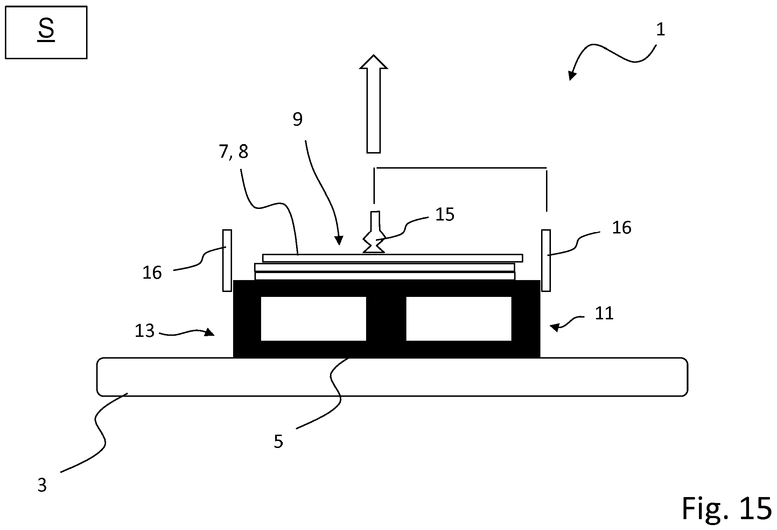

Die Figuren 15 bis 19 zeigen die Ausführungsform einer Vorrichtung 1 aus den Figuren 9 bis 14 sowie einzelne weitere Schritte, wie sie bei einer denkbaren Ausführungsform des erfindungsgemäßen Verfahrens vorgesehen sein können.

Wie aus einer Zusammenschau der Fig. 15 mit den Figuren 9 bis 14 zu erkennen, hat das vertikale Niveau des Stapels 9 in Fig. 15 gegenüber dem vertikalen Niveau des Stapels 9 in den Figuren 9 bis 14 durch Entnahme von Zuschnitten 7 bzw. Zwischenlagen 8 abgenommen. Die Zentrierelemente 16 bzw. Anschläge 18 würden beim vorder- und rückbündigen Ausrichten der zuoberst auf dem Stapel 9 angeordneten Zwischenlage 8 bzw. des zuoberst auf dem Stapel 9 angeordneten Zuschnittes 7 gegenüber benachbarten Zwischenlagen 8 bzw. Zuschnitten 7 ungewollte mit der vorderen und hinteren Außenkante 11 und 13 der Palette 5 in Kontakt treten.

Um dieses Problem zu vermeiden und weiterhin zuoberst auf dem Stapel 9 angeordnete Zwischenlagen 8 bzw. Zuschnitte 7 vom Stapel 9 abnehmen zu können, wir das erste Saug- und/oder Greifwerkzeug 15 auf die zuoberst auf dem Stapel 9 angeordnete Zwischenlage 8 bzw. auf den zuoberst auf dem Stapel 9 angeordneten Zuschnitt 7 aufgesetzt und fixiert den Zuschnitt 7 bzw. die Zwischenlage 8 durch Unterdruck. Das zweite Saug- und/oder Greifwerkzeug 17 befindet sich in Fig. 15 außerhalb des Bildbereichs und bewegt eine bereits vom Stapel 9 abgezogene Zwischenlage 8 bzw. einen bereits vom Stapel 9 abgezogenen Zuschnitt 7 in Richtung einer zugeordneten Palette.

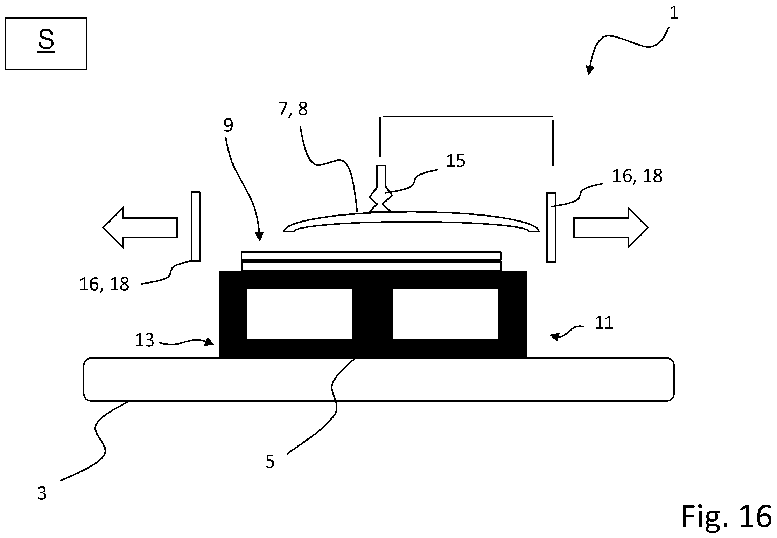

Die Fig. 16 zeigt die Ausführungsform einer Vorrichtung 1 aus den Figuren 9 bis 15 und einen weiteren Verfahrensschritt, wie er auf den Verfahrensschritt gemäß Fig. 15 folgen kann. Über das erste Saug- und/oder Greifwerkzeug 15 wird der zuoberst auf dem Stapel 9 angeordnete Zuschnitt 7 bzw. die zuoberst auf dem Stapel 9 angeordnete Zwischenlage 8 vom Stapel 9 abgehoben und gegenüber dem Zwischenlagenstapel 9 bzw. gegenüber der Palette 5 versetzt, so dass eine vordere Kante 4 die Außenkante 11 der Palette 5 seitlich überragt.

Weiter werden die als Anschlag 18 ausgebildeten Zentrierelemente 16 vom Stapel 9 bzw. von der Palette 5 weg bewegt. Die Bewegung der Zentrierelemente 16 bzw. Anschläge 18 erfolgt hierbei zeitsynchron und wird veranlasst durch die Steuerungseinheit S.

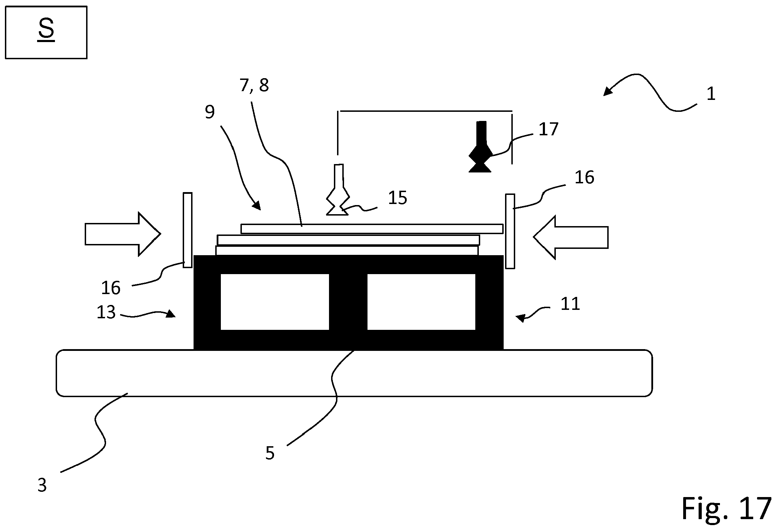

Die Fig. 17 zeigt die Ausführungsform einer Vorrichtung 1 aus den Figuren 9 bis 16 und einen weiteren Verfahrensschritt, wie er auf den Verfahrensschritt gemäß Fig. 16 folgen kann. Das zweite Saug- und/oder Greifwerkzeug 17 befindet sich nun im Bildbereich und bewegt sich in Richtung der zuoberst auf dem Stapel 9 angeordneten Zwischenlage 8 bzw. in Richtung des zuoberst auf dem Stapel 9 angeordneten Zuschnittes 7. Das erste Saug- und/oder Greifwerkzeug 15 hat seine Verbindung zur zuoberst auf dem Stapel 9 angeordneten Zwischenlage 8 bzw. zum zuoberst auf dem Stapel 9 angeordneten Zuschnitt 7 aufgehoben. Der zuoberst auf dem Stapel 9 angeordnete Zuschnitt 7 bzw. die zuoberst auf dem Stapel 9 angeordnete Zwischenlage 8 liegt weiterhin auf dem Stapel 9 auf, wobei ihre vordere Kante 4 durch die jeweils als Anschlag 18 ausgebildeten Zentrierelemente 16 in eine bestimmte Orientierung überführt wurde, bei welcher die vordere Kante 4 bündig zur vorderen Außenkante 11 der Palette 5 ausgerichtet ist bzw. mit der vorderen Außenkante 11 der Palette 5 in lotrechter Richtung fluchtet.

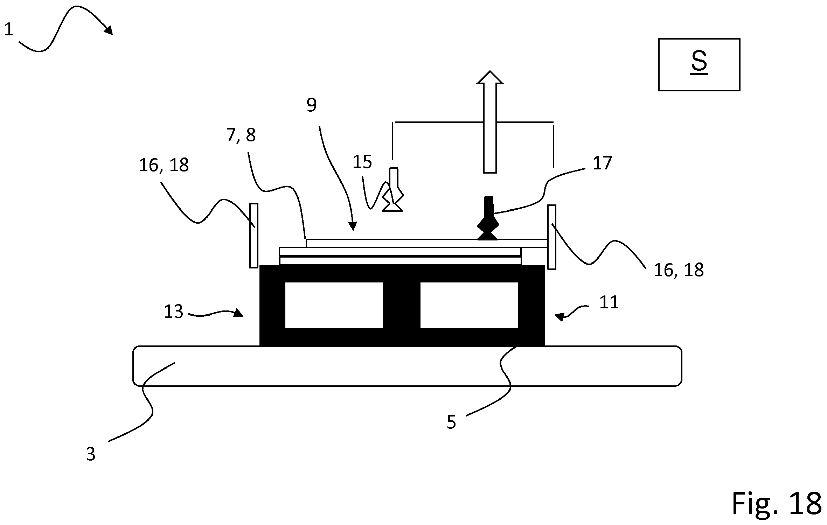

Die Fig. 18 zeigt die Ausführungsform einer Vorrichtung 1 aus den Figuren 9 bis 17 und einen weiteren Verfahrensschritt, wie er auf den Verfahrensschritt gemäß Fig. 17 folgen kann. Das zweite Saug- und/oder Greifwerkzeug 17 wurde nun auf die zuoberst auf dem Stapel 9 angeordnete Zwischenlage 8 bzw. den zuoberst auf dem Stapel 9 angeordneten Zuschnitt 7 aufgesetzt. Weiter wurde eine pneumatische Verbindung zwischen dem zweiten Saug- und/oder Greifwerkzeug 17 und der zuoberst auf dem Stapel 9 angeordneten Zwischenlage 8 bzw. dem zuoberst auf dem Stapel 9 angeordneten Zuschnitt 7 hergestellt.

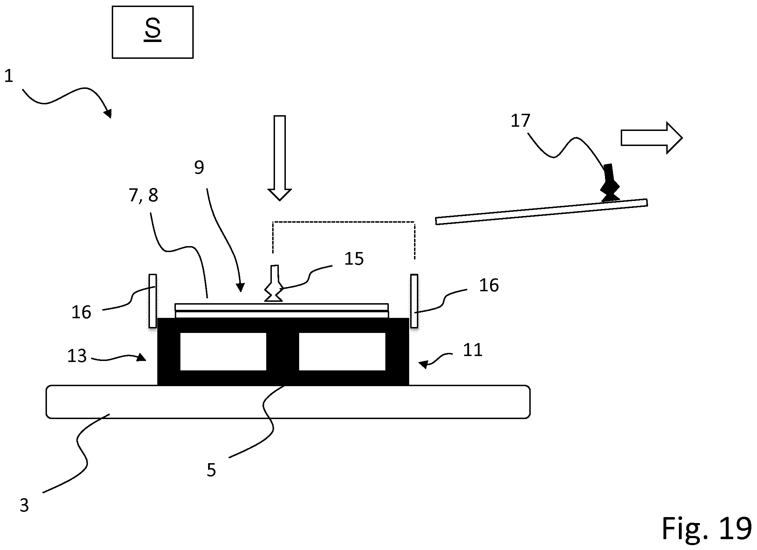

Die Fig. 19 zeigt die Ausführungsform einer Vorrichtung 1 aus den Figuren 9 bis 18 und einen weiteren Verfahrensschritt, wie er auf den Verfahrensschritt gemäß Fig. 18 folgen kann. Das zweite Saug- und/oder Greifwerkzeug 17 hat die ehemals zuoberst auf dem Stapel 9 angeordnete Zwischenlage 8 bzw. den ehemals zuoberst auf dem Stapel 9 angeordneten Zuschnitt 7 vom Stapel 9 vollständig abgezogen und bewegt die vollständig vom Stapel 9 abgezogene Zwischenlage 8 bzw. den vollständig vom Stapel 9 abgezogenen Zuschnitt 7 in Richtung einer nicht mit dargestellten Ablage, von welcher ein Arbeitsinstrument den vollständig vom Stapel 9 abgezogenen Zuschnitt 7 bzw. die vollständig vom Stapel 9 abgezogene Zwischenlage 8 entgegennimmt und auf einer zugeordneten Palette absetzt.

Das erste Saug- und/oder Greifwerkzeug 15 wurde auf die nun zuoberst auf dem Stapel 9 angeordnete Zwischenlage 8 bzw. auf den nun zuoberst auf dem Stapel 9 angeordneten Zuschnitt 7 aufgesetzt und stellt eine Verbindung zum zuoberst auf dem Stapel 9 angeordneten Zuschnitt 7 bzw. zur zuoberst auf dem Stapel 9 angeordneten Zwischenlage 8 mittels Unterdruck her. Die weiteren Schritte erfolgen sodann gemäß vorherigen Figuren 15 bis 18 in der beschrieben Reihenfolge erneut. Die Zuschnitte 7 bzw. Zwischenlagen 8 können einzeln von der Palette 5 abgenommen werden, bis sich keine Zuschnitte 7 bzw. Zwischenlagen 8 auf der Palette 5 befinden. Sodann kann die Palette 5 von der Aufstellfläche 3 weggeführt und durch eine neue Palette mit neuen Zuschnitten bzw. Zwischenlagen ersetzt werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Vorrichtung
- 3: Aufstellfläche
- 4: Vordere Kante (Zuschnitt 7, Zwischenlage 8)
- 5: Palette
- 7: Zuschnitt
- 8: Zwischenlage
- 9: Stapel
- 11: Vordere Außenkante (Palette 5)
- 13: Hintere Außenkante (Palette 5)
- 15: Saug- und/oder Greifwerkzeug, erstes Saug- und/oder Greifwerkzeug, bestimmtes Saug- und/oder Greifwerkzeug
- 16: Zentrierelement
- 17: Saug- und/oder Greifwerkzeug, zweites Saug- und/oder Greifwerkzeug
- 18: Anschlag
- 20: Bereich einer Zustellbewegung

- S: Steuerungseinheit

## Patentansprüche

1. Verfahren zum Umgang mit flächigen Zuschnitten (7) eines eine Vielzahl an flächigen Zuschnitten (7) aufweisenden Stapels (9), wobei das Verfahren zumindest die folgenden Schritte umfasst:
- Durchführen einer Versatzbewegung für einen jeweils zuoberst auf dem Stapel (9) angeordneten Zuschnitt (7), wobei der jeweilige zuoberst auf dem Stapel (9) angeordnete Zuschnitt (7) relativ zu weiteren benachbarten Zuschnitten (7) bewegt wird, so dass eine vordere Kante (4) des zuoberst auf dem Stapel (9) angeordneten Zuschnittes (7) bei Beenden der Versatzbewegung über den Stapel (9) hinausragt;
- Durchführen einer Zentrierbewegung zeitlich nach Beenden der Versatzbewegung, wobei die vordere über den Stapel (9) hinausragende Kante (4) des zuoberst auf dem Stapel (9) angeordneten Zuschnittes (7) in eine bestimmte Orientierung und/oder Position überführt wird und wobei zeitlich nach Beenden der Zentrierbewegung der zuoberst auf dem Stapel (9) angeordnete Zuschnitt (7) weiterhin auf dem Stapel (9) aufliegt.

2. Verfahren nach Anspruch 1, bei dem es sich bei der Vielzahl an Zuschnitten (7) um Zwischenlagen (8) handelt.

3. Verfahren nach Anspruch 1 oder 2, bei dem zum Durchführen der Versatzbewegung mindestens ein Saug- und/oder Greifwerkzeug (15, 17) eine Verbindung zu dem jeweiligen zuoberst auf dem Stapel (9) angeordneten Zuschnitt (7) herstellt, hierauf folgend den jeweiligen zuoberst auf dem Stapel (9) angeordneten Zuschnitt (7) versetzt und zeitlich vor dem Durchführen der Zentrierbewegung die Verbindung zum jeweiligen zuoberst auf dem Stapel (9) angeordneten Zuschnitt (7) aufhebt.

4. Verfahren nach Anspruch 3, bei dem das mindestens eine Saug- und/oder Greifwerkzeug (15, 17) zeitlich nach Durchführen der Zentrierbewegung erneut eine Verbindung zu dem jeweiligen zuoberst auf dem Stapel (9) angeordneten Zuschnitt (7) herstellt und hierauf den jeweiligen zuoberst auf dem Stapel (9) angeordneten Zuschnitt (7) vollständig vom Stapel (9) abzieht und vom Stapel (9) weg bewegt.

5. Verfahren nach Anspruch 4, bei dem ein bestimmtes Saug- und/oder Greifwerkzeug (15, 17)
- die Verbindung zum jeweiligen zuoberst auf dem Stapel (9) angeordneten Zuschnitt (7) herstellt, hierauf folgend den jeweiligen zuoberst auf dem Stapel (9) angeordneten Zuschnitt (7) versetzt und zeitlich vor dem Durchführen der Zentrierbewegung die Verbindung zum jeweiligen zuoberst auf dem Stapel (9) angeordneten Zuschnitt (7) aufhebt und wobei dieses bestimmte Saug- und/oder Greifwerkzeug (15, 17)
- zeitlich nach Durchführen der Zentrierbewegung den jeweiligen zuoberst auf dem Stapel (9) angeordneten Zuschnitt (7) vollständig vom Stapel (9) abzieht und vom Stapel (9) weg bewegt.

6. Verfahren nach einem der Ansprüche 1 bis 5, bei dem zum Überführen der vorderen Kante (4) des zuoberst auf dem Stapel (9) angeordneten Zuschnittes (7) in die bestimmte Position und/oder Orientierung ein Anschlag (18) gegen den zuoberst auf dem Stapel (9) angeordneten Zuschnitt (7) sowie gegen die weiteren Zuschnitte bewegt wird, welche weiteren Zuschnitte dem jeweiligen zuoberst auf dem Stapel (9) angeordneten Zuschnitt (7) benachbart sind.

7. Verfahren nach einem der Ansprüche 3, 4 und/oder 6, bei dem ein erstes mit dem Anschlag (18) mechanisch bewegungsgekoppeltes Saug- und/oder Greifwerkzeug (15)
- die Verbindung zum jeweiligen zuoberst auf dem Stapel (9) angeordneten Zuschnitt (7) herstellt, hierauf folgend den jeweiligen zuoberst auf dem Stapel (9) angeordneten Zuschnitt (7) versetzt und zeitlich vor dem Durchführen der Zentrierbewegung die Verbindung zum jeweiligen zuoberst auf dem Stapel (9) angeordneten Zuschnitt (7) aufhebt und wobei ein weiteres Saug- und/oder Greifwerkzeug (17)
- zeitlich nach Durchführen der Zentrierbewegung den jeweiligen zuoberst auf dem Stapel (9) angeordneten Zuschnitt (7) vollständig vom Stapel (9) abzieht und vom Stapel (9) weg bewegt.

8. Verfahren nach einem der Ansprüche 1 bis 7, bei dem eine vertikale Erstreckung des Stapels (9) festgestellt und/oder erkannt wird, wobei
- der jeweilige zuoberst auf dem Stapel (9) angeordnete Zuschnitt (7) bei einer bestimmten festgestellten und/oder erkannten ersten vertikalen Erstreckung in eine erste bestimmte Orientierung gebracht wird, bei welcher die vordere Kante (4) bündig zu vorderen Kanten weiterer Zuschnitte (7) des Stapels (9) ausgerichtet ist, und wobei
- der jeweilige zuoberst auf dem Stapel (9) angeordnete Zuschnitt (7) bei einer bestimmten festgestellten und/oder erkannten zweiten vertikalen Erstreckung, die geringer als die erste vertikale Erstreckung ausgebildet ist, in eine zweite bestimmte Orientierung gebracht ist, bei welcher die vordere Kante (4) bündig zu einer vorderen Außenkante (11) einer die Zuschnitte (7) tragenden Palette (5) ausgerichtet ist oder über eine vordere Außenkante (11) der die Zuschnitte (7) tragenden Palette (5) übersteht.

9. Vorrichtung (1) zum Umgang mit flächigen Zuschnitten (7) eines eine Vielzahl an flächigen Zuschnitten (7) aufweisenden Stapels (9), umfassend:
- mindestens ein Saug- und/oder Greifwerkzeug (15, 17),
- wenigstens ein Zentrierelement (16), sowie
- eine Steuerungseinheit (S), welche mit dem mindestens einen Saug- und/oder Greifwerkzeug (15, 17) und dem wenigstens einen Zentrierelement (16) in Verbindung steht, **dadurch gekennzeichnet, dass**
- das mindestens eine Saug- und/oder Greifwerkzeug (15, 17) über die Steuerungseinheit (S) zum Versetzen eines jeweils zuoberst auf dem Stapel (9) angeordneten Zuschnittes (7) ansteuerbar ist, so dass eine vordere Kante (4) des zuoberst auf dem Stapel (9) angeordneten Zuschnittes (7) nach Versatz über den Stapel (9) hinausragt, und dass
- das wenigstens eine Zentrierelement (16) über die Steuerungseinheit (S) zum Überführen der jeweiligen über den Stapel (9) hinausragenden vorderen Kante (4) des jeweiligen zuoberst auf dem Stapel (9) angeordneten Zuschnittes (7) in eine bestimmte Orientierung und/oder Position ansteuerbar ist, nach welcher Überführung der die jeweilige vordere Kante (4) aufweisende Zuschnitt (7) weiterhin auf dem Stapel (9) aufliegt.

10. Vorrichtung nach Anspruch 9, bei der das mindestens eine Saug- und/oder Greifwerkzeug (15, 17) über die Steuerungseinheit 8S) zum Abziehen des jeweiligen Zuschnittes (7) vom Stapel (9) ausgebildet ist, dessen vordere Kante (4) in die bestimmte Orientierung und/oder Position überführt wurde.

11. Vorrichtung nach Anspruch 10, bei der ein bestimmtes Saug- und/oder Greifwerkzeug (15) über die Steuerungseinheit (S) zum Versetzen des jeweils zuoberst auf dem Stapel (9) angeordneten Zuschnittes (7) ansteuerbar ist, so dass eine vordere Kante (4) des zuoberst auf dem Stapel (9) angeordneten Zuschnittes (7) über den Stapel (9) hinausragt und bei welchem dieses bestimmte Saug- und/oder Greifwerkzeug (15) über die Steuerungseinheit (S) zum Abziehen des jeweiligen Zuschnittes (7) vom Stapel (9) ansteuerbar ist, dessen vordere Kante (4) in die bestimmte Orientierung und/oder Position überführt wurde.

12. Vorrichtung nach einem der Ansprüche 9 bis 11, umfassend ein erstes Saug- und/oder Greifwerkzeug (15), welches über die Steuerungseinheit (S) zum Versetzen eines jeweils zuoberst auf dem Stapel (9) angeordneten Zuschnittes (7) ansteuerbar ist und ein zweites Saug- und/oder Greifwerkzeug (17), welches über die Steuerungseinheit (S) zum Abziehen des jeweiligen Zuschnittes (7) vom Stapel (9) ausgebildet ist, dessen vordere Kante (4) in die bestimmte Orientierung und/oder Position überführt wurde.

13. Vorrichtung nach Anspruch 12, bei der das erste Saug- und/oder Greifwerkzeug (15) mit dem Zentrierelement (16) bewegungsgekoppelt ist.

14. Vorrichtung nach Anspruch 12 oder 13, umfassend ein weiteres Zentrierelement (16), welches zur rückbündigen Ausrichtung mehrere zuoberst auf dem Stapel (9) angeordneter Zuschnitte (7) mit dem Zentrierelement (16) bewegungsgekoppelt ist.

15. Vorrichtung nach einem der Ansprüche 9 bis 14, bei der die Steuerungseinheit (S) zum Feststellen und/oder Erkennen einer vertikalen Ist-Erstreckung des Stapels (9) ausgebildet ist, wobei das wenigstens eine Zentrierelement (16) über die Steuerungseinheit (S) unter Berücksichtigung der jeweiligen erkannten und/oder festgestellten Ist-Erstreckung wahlweise
a) zur vorderbündigen Ausrichtung des jeweiligen zuoberst auf dem Stapel (9) angeordneten Zuschnittes (7) gegenüber weiteren Zuschnitten (7) des Stapels (9) ansteuerbar ist, oder
b) zum Überführen der vorderen Kante (4) eines jeweiligen zuoberst auf dem Stapel (9) angeordneten Zuschnittes (7) in eine bestimmte Orientierung und/oder Position ansteuerbar ist, bei welcher die vordere Kante (4) bündig zu einer vorderen Außenkante (11) einer Palette (5) des Stapels (9) ausgerichtet ist oder bei welcher die vordere Kante (4) die vordere Außenkante (11) der Palette (5) seitlich überragt.

## Claims

1. A method of handling flat blanks (7) from a stack (9), which stack (9) is comprising a plurality of flat blanks (7), the method comprising at least the following steps:
- carrying out an offset movement for a blank (7), which blank (7) is) in each case arranged on the top of the stack (9, the blank (7)) in each case arranged on the top of the stack (9) being moved relative to further adjacent blanks (7), so that a front edge (4) of the blank (7) arranged on the top of the stack (9) projects beyond the stack (9) at the end of the offset movement;
- carrying out a centring movement in time after the end of the offset movement, wherein the front edge (4) of the blank (7) arranged on the top of the stack (9), which front edge (4) is projecting beyond the stack (9), is transferred into a specific orientation and/or position and wherein in time after the end of the centring movement the blank (7) arranged on the top of the stack (9) continues to rest on the stack (9).

2. The method according to claim 1, wherein the plurality of blanks (7) are intermediate layers (8).

3. The method according to claim 1 or 2, wherein, in order to carry out the offset movement, at least one suction tool and/or gripping tool (15, 17) establishes a connection to the respective blank (7) arranged on the top of the stack (9), then displaces the respective blank (7) arranged on the top of the stack (9) and, before the centring movement is carried out, releases the connection to the respective blank (7) arranged on the top of the stack (9).

4. The method according to claim 3, wherein the at least one suction tool and/or gripping tool (15, 17), after carrying out the centring movement, again establishes a connection to the respective blank (7) arranged on the top of the stack (9) and then completely pulls the respective blank (7) arranged on the top of the stack (9) off the stack (9) and moves it away from the stack (9).

5. The method according to claim 4, wherein a specific suction tool and/or gripping tool (15, 17)
- establishes the connection to the respective blank (7) arranged on the top of the stack (9), then displaces the respective blank (7) arranged on the top of the stack (9) and, before the centring movement is carried out, releases the connection to the respective blank (7) arranged on the top of the stack (9), and wherein this particular suction tool and/or gripping tool (15, 17)
- after the centring movement has been carried out completely pulls off the respective blank (7) arranged on the top of the stack (9) and moves it away from the stack (9).

6. The method according to one of the claims 1 to 5, wherein, in order to transfer the front edge (4) of the blank (7) arranged on the top of the stack (9) into the specific position and/or orientation, a stop (18) is moved against the blank (7) arranged on the top of the stack (9) as well as against the further blanks, which further blanks are adjacent to the respective blank (7) arranged on the top of the stack (9).

7. The method according to one of the claims 3, 4 and/or 6, wherein a first suction tool and/or gripping tool (15), which is mechanically motion-coupled to the stop (18),
- establishes the connection to the respective blank (7) arranged on the top of the stack (9), subsequently displaces the respective blank (7) arranged on the top of the stack (9) and, before the centring movement is carried out, releases the connection to the respective blank (7) arranged on the top of the stack (9), and wherein a further suction tool and/or gripping tool (17)
- after the centring movement has been carried out, completely pulls off the respective blank (7) arranged on the top of the stack (9) and moves it away from the stack (9).

8. The method according to one of the claims 1 to 7, wherein a vertical extension of the stack (9) is determined and/or detected, wherein
- the respective blank (7) arranged on the top of the stack (9) is brought into a first specific orientation at a specific determined and/or detected first vertical extent, at which the front edge (4) is aligned flush to front edges of further blanks (7) of the stack (9), and wherein
- the respective blank (7) arranged on the top of the stack (9) is brought into a second specific orientation when a specific second vertical extent is determined and/or detected, which second vertical extent is designed to be smaller than the first vertical extent, at which second specific orientation the front edge (4) is aligned flush to a front outer edge (11) of a pallet (5) carrying the blanks (7) or projects beyond a front outer edge (11) of the pallet (5) carrying the blanks (7).

9. A device (1) for handling flat blanks (7) of a stack (9), which stack (9) comprises a plurality of flat blanks (7), the device (1) comprising:
- at least one suction tool and/or gripping tool (15, 17),
- at least one centring element (16), and
- a control unit (S), which control unit (S) is in communication with the at least one suction tool and/or gripping tool (15, 17) and the at least one centring element (16), **characterized in that**
- the at least one suction tool and/or gripping tool (15, 17) can be controlled via the control unit (S) for displacing a respective blank (7) arranged on the top of the stack (9), so that a front edge (4) of the blank (7) arranged on the top of the stack (9) projects beyond the stack (9) after the displacement, and that
- the at least one centring element (16) can be controlled via the control unit (S) for transferring the respective front edge (4) of the respective blank (7) arranged on the top of the stack (9) into a specific orientation and/or position, which front edge (4) projects beyond the stack (9), after which transfer the blank (7) having the respective front edge (4) continues to rest on the stack (9).

10. The device according to claim 9, wherein the at least one suction tool and/or gripping tool (15, 17) is designed via the control unit (S) to pull off the respective blank (7) from the stack (9), the front edge (4) of which blank (7) has been transferred into the determined orientation and/or position.

11. The device according to claim 10, wherein a specific suction tool and/or gripping tool (15) can be controlled via the control unit (S) for displacing the respective blank (7) arranged on the top of the stack (9), so that a front edge (4) of the blank (7) arranged on the top of the stack (9) projects beyond the stack (9), and in which this specific suction tool and/or gripping tool (15) can be actuated via the control unit (S) for pulling off the respective blank (7) from the stack (9), the front edge (4) of which blank (7) has been transferred into the specific orientation and/or position.

12. The device according to one of the claims 9 to 11, comprising a first suction tool and/or gripping tool (15), which can be controlled via the control unit (S) for displacing a respective blank (7) arranged on the top of the stack (9), and a second suction tool and/or gripping tool (17), which is designed via the control unit (S) for pulling off the respective blank (7) from the stack (9), the front edge (4) of which blank (7) has been transferred into the specific orientation and/or position.

13. The device according to claim 12, wherein the first suction tool and/or gripping tool (15) is motion-coupled to the centring element (16).

14. The device according to claim 12 or 13, comprising a further centring element (16) which is motion-coupled to the centring element (16) for back-flush alignment of a plurality of blanks (7) arranged on the top of the stack (9).

15. The device according to one of the claims 9 to 14, wherein the control unit (S) is designed to determine and/or detect an actual vertical extent of the stack (9), wherein the at least one centring element (16) via the control unit (S) taking into account the respective detected and/or determined actual extent optionally
a) can be controlled for the front-flush alignment of the respective blank (7) arranged on the top of the stack (9) with respect to further blanks (7) of the stack (9), or
b) can be controlled for transferring the front edge (4) of a respective blank (7) arranged on the top of the stack (9) into a specific orientation and/or position, in which the front edge (4) is aligned flush to a front outer edge (11) of a pallet (5) of the stack (9) or in which the front edge (4) projects laterally beyond the front outer edge (11) of the pallet (5).

## Revendications

1. Procédé de manipulation de découpes (7) plates d'une pile (9) comprenant une pluralité de découpes (7) plates, le procédé comprenant au moins les étapes suivantes consistant à:
- effectuer un mouvement de décalage pour une découpe (7) disposée respectivement tout en dessus sur la pile (9), dans lequel la découpe (7) respective disposée tout en dessus sur la pile (9) est déplacée par rapport à d'autres découpes (7) adjacentes de sorte qu'un bord avant (4) de la découpe (7) disposée tout en dessus sur la pile (9) fait saillie au-delà de la pile (9) lorsque le mouvement de décalage est terminé;
- effectuer un mouvement de centrage après avoir terminé le mouvement de décalage, dans lequel on fait passer le bord avant (4) de la découpe (7) disposée tout en dessus sur la pile (9), qui fait saillie au-delà de la pile (9), dans une orientation et/ou position déterminée(s), et dans lequel, après avoir terminé le mouvement de centrage, la découpe (7) disposée tout en dessus sur la pile (9) continue à reposer sur la pile (9).

2. Procédé selon la revendication 1, dans lequel la pluralité de découpes (7) sont des couches intermédiaires (8).

3. Procédé selon la revendication 1 ou 2, dans lequel, pour effectuer le mouvement de décalage, au moins un outil d'aspiration et/ou de préhension (15, 17) établit une liaison à la découpe (7) respective disposée tout en dessus sur la pile (9), ensuite décale la découpe (7) respective disposée tout en dessus sur la pile (9) et supprime la liaison à la découpe (7) respective disposée tout en dessus sur la pile (9), avant que le mouvement de centrage ne soit effectué.

4. Procédé selon la revendication 3, dans lequel, après avoir effectué le mouvement de centrage, ledit au moins un outil d'aspiration et/ou de préhension (15, 17) établit à nouveau une liaison à la découpe (7) respective disposée tout en dessus sur la pile (9) et puis retire complètement de la pile (9) la découpe (7) respective disposée tout en dessus sur la pile (9), et déplace celle-ci dans la direction opposée à la pile (9).

5. Procédé selon la revendication 4, dans lequel un outil déterminé d'aspiration et/ou de préhension (15, 17)
- établit la liaison à la découpe (7) respective disposée tout en dessus sur la pile (9), puis décale la découpe (7) respective disposée tout en dessus sur la pile (9) et supprime la liaison à la découpe (7) respective disposée tout en dessus sur la pile (9) avant que le mouvement de centrage ne soit effectué, et dans lequel cet outil déterminé d'aspiration et/ou de préhension (15, 17),
- après avoir effectué le mouvement de centrage, retire complètement de la pile (9) la découpe (7) respective disposée tout en dessus sur la pile (9), et déplace celle-ci dans la direction opposée à la pile (9).

6. Procédé selon l'une quelconque des revendications 1 à 5, dans lequel, pour faire passer le bord avant (4) de la découpe (7) disposée tout en dessus sur la pile (9) dans la position et/ou l'orientation déterminée(s), une butée (18) est déplacée contre la découpe (7) disposée tout en dessus sur la pile (9) ainsi que contre les autres découpes, lesquelles autres découpes sont adjacentes à la découpe (7) disposée tout en dessus sur la pile (9).

7. Procédé selon l'une quelconque des revendications 3, 4 et/ou 6, dans lequel un premier outil d'aspiration et/ou de préhension (15) qui est couplé mécaniquement en mouvement à la butée (18)
- établit la liaison à la découpe (7) respective disposée tout en dessus sur la pile (9), puis décale la découpe (7) respective disposée tout en dessus sur la pile (9) et supprime la liaison à la découpe (7) respective disposée tout en dessus sur la pile (9), avant que le mouvement de centrage ne soit effectué, et dans lequel un autre outil d'aspiration et/ou de préhension (15, 17),
- après avoir effectué le mouvement de centrage, retire complètement de la pile (9) la découpe (7) respective disposée tout en dessus sur la pile (9), et déplace celle-ci dans la direction opposée à la pile (9).

8. Procédé selon l'une quelconque des revendications 1 à 7, dans lequel une extension verticale de la pile (9) est déterminée et/ou détectée, dans lequel,
- lorsqu'une certaine première extension verticale est déterminée et/ou détectée, la découpe (7) respective disposée tout en dessus sur la pile (9) est amenée dans une première orientation déterminée dans laquelle le bord avant (4) est aligné de manière à être à fleur par rapport à des bords avant d'autres découpes (7) de la pile (9), et dans lequel
- lorsqu'une certaine deuxième extension verticale est déterminée et/ou détectée qui est inférieure à la première extension verticale, la découpe (7) respective disposée tout en dessus sur la pile (9) est amenée dans une deuxième orientation déterminée dans laquelle le bord avant (4) est aligné de manière à être à fleur par rapport à un bord extérieur avant (11) d'une palette (5) portant les découpes (7) ou fait saillie au-delà d'un bord extérieur avant (11) de la palette (5) portant les découpes (7).

9. Dispositif (1) de manipulation de découpes (7) plates d'une pile (9) comprenant une pluralité de découpes (7) plates, comprenant:
- au moins un outil d'aspiration et/ou de préhension (15, 17),
- au moins un élément de centrage (16), ainsi qu'
- une unité de commande (S) qui est en communication avec ledit au moins un outil d'aspiration et/ou de préhension (15, 17) et avec ledit au moins un élément de centrage (16), **caractérisé par le fait que**
- ledit au moins un outil d'aspiration et/ou de préhension (15, 17) peut être commandé via l'unité de commande (S) pour décaler une découpe (7) disposée respectivement tout en dessus sur la pile (9), de sorte qu'un bord avant (4) de la découpe (7) disposée tout en dessus sur la pile (9) fait saillie au-delà de la pile (9) après le décalage, et que
- ledit au moins un élément de centrage (16) peut être commandé via l'unité de commande (S) pour transférer le bord avant (4) respectif de la découpe (7) respective disposée tout en dessus sur la pile (9), lequel fait saillie au-delà de la pile (9), dans une orientation et/ou une position déterminée(s), la découpe (7) présentant le bord avant (4) respectif continue à reposer sur la pile (9) après ledit transfert.

10. Dispositif selon la revendication 9, dans lequel ledit au moins un outil d'aspiration et/ou de préhension (15, 17) est conçu, via l'unité de commande (S), pour retirer la découpe (7) respective de la pile (9), dont le bord avant (4) a été transféré dans l'orientation et/ou la position déterminée(s).

11. Dispositif selon la revendication 10, dans lequel un outil d'aspiration et/ou de préhension (15) déterminé peut être commandé via l'unité de commande (S) pour décaler la découpe (7) disposée respectivement tout en dessus sur la pile (9), de sorte qu'un bord avant (4) de la découpe (7) disposée tout en dessus sur la pile (9) fait saillie au-delà de la pile (9) et dans lequel cet outil d'aspiration et/ou de préhension (15) déterminé peut être commandé via l'unité de commande (S) pour retirer la découpe (7) respective de la pile (9), dont le bord avant (4) a été transféré dans l'orientation et/ou la position déterminée(s).

12. Dispositif selon l'une quelconque des revendications 9 à 11, comprenant un premier outil d'aspiration et/ou de préhension (15) qui peut être commandé via l'unité de commande (S) pour décaler une découpe (7) disposée respectivement tout en dessus sur la pile (9), et un deuxième outil d'aspiration et/ou de préhension (17) qui est conçu, via l'unité de commande (S), pour retirer la découpe (7) respective de la pile (9), dont le bord avant (4) a été transféré dans l'orientation et/ou la position déterminée(s).

13. Dispositif selon la revendication 12, dans lequel le premier outil d'aspiration et/ou de préhension (15) est couplé en mouvement à l'élément de centrage (16).

14. Dispositif selon la revendication 12 ou 13, comprenant un autre élément de centrage (16) qui est couplé en mouvement à l'élément de centrage (16) pour aligner une pluralité de découpes (7) disposées tout en dessus sur la pile (9), de manière à être à fleur à l'arrière.

15. Dispositif selon l'une quelconque des revendications 9 à 14, dans lequel l'unité de commande (S) est conçue pour déterminer et/ou détecter une extension verticale réelle de la pile (9), dans lequel ledit au moins un élément de centrage (16) peut être commande au choix, via l'unité de commande (S), en prenant en compte l'extension réelle respective détectée et/ou déterminée,
a) pour aligner la découpe (7) respective disposée tout en dessus sur la pile (9), de manière à être à fleur à l'avant par rapport à d'autres découpes (7) de la pile (9), ou
b) pour transférer le bord avant (4) d'une découpe (7) respective disposée tout en dessus sur la pile (9) dans une orientation et/ou une position déterminée dans laquelle le bord avant (4) est aligné de manière à être à fleur par rapport à un bord extérieur avant (11) d'une palette (5) de la pile (9) ou dans laquelle le bord avant (4) fait saillie latéralement au-delà du bord extérieur avant (11) de la palette (5).
